# EUROPEAN PATENT APPLICATION

(11) **EP 4 797 714 A1**
(43) Date of publication of application: **26.08.2026**
(21) Application number: 24882620.8
(22) Date of filing: 26.08.2024
(51) Int. Cl.: H04N 23/55, H04N 23/54, G03B 17/12, G02B 1/00, G06N 3/09, G06N 3/045, G06N 3/084, G06V 10/774, G06V 10/82, G06V 10/74

(54) **ELECTRONIC DEVICE FOR PERFORMING VISION PERCEPTION FROM IMAGE ACQUIRED USING META LENS, AND OPERATING METHOD THEREOF**

(30) Priority: 27.10.2023 KR 20230145938
(71) Applicant: Samsung Electronics Co., Ltd., Suwon-si, Gyeonggi-do 16677 (KR)
(72) Inventor: AN, Sungkwon, Suwon-si, Gyeonggi-do 16677 (KR); KIM, Bomi, Suwon-si, Gyeonggi-do 16677 (KR); LEE, Jungmin, Suwon-si, Gyeonggi-do 16677 (KR); JUNG, Hyunjoo, Suwon-si, Gyeonggi-do 16677 (KR); CHOI, Kwangpyo, Suwon-si, Gyeonggi-do 16677 (KR)
(74) Representative: Gulde & Partner
(86) International application number: PCT/KR2024/012695
(87) International publication number: WO 2025/089591

(57) **Abstract**

An electronic device for performing vision perception from an image acquired using a meta lens, and an operating method thereof are provided. The electronic device according to one embodiment of the present disclosure comprises: a meta lens having a pattern formed on the surface thereof and including a plurality of pillars or pins with different shapes, heights and widths; and an image sensor configured to receive phase-modulated light reflected from an object and transmitted through the meta lens, and obtain a coded image by converting the received light into an electrical signal; and at least one processor configured to input the coded image into an artificial intelligence model, and obtain a label indicating a perception result of an object through inference using the artificial intelligence model, wherein the artificial intelligence model may be a neural network model trained to obtain a simulation image by inputting an RGB image into a model reflecting optical characteristics of the meta lens, and output, as the perception result of the simulation image, a label indicating ground truth of the RGB image that was input.

## Description

### Technical Field

The present disclosure relates to an electronic device for performing vision perception from an image obtained by using a meta lens and an operating method thereof. More specifically, the present disclosure discloses an electronic device for obtaining a coded image through a camera including a meta lens and performing vision perception, such as object detection, classification, face detection, or segmentation, from the coded image by using an artificial intelligence model.

### Background Art

Recently, there has been an increase in the number of cases where cameras are installed in home appliances such as TVs, refrigerators, and robot vacuum cleaners, or Internet of Things (IoT) devices, and images captured by such cameras are used for monitoring subjects. Advances in vision perception-based artificial intelligence technology have raised the risk of personal information leakage due to hijacking or hacking of image data when cameras are used for monitoring in places where personal privacy should not be exposed, such as at home or in indoor environments. Due to the risk of personal information leakage, users may be hesitant to install cameras in their home appliances or loT devices.

An existing method for preventing personal information leakage is to use an event camera that obtains an image based on the degree of change in the intensity of light, instead of obtaining an RGB image by receiving light reflected from an object. Event cameras are advantageous in terms of privacy protection and prevention of personal information leakage in that they do not obtain RGB images that can be visually identified by humans. However, the method of using event cameras has a limitation in that images can be obtained only when there is a change in the intensity of light.

### Disclosure of Invention

### Solution to Problem

An aspect of the present disclosure may provide an electronic device for obtaining a vision perception result from an image obtained through a meta lens. The electronic device according to an embodiment of the present disclosure may include a meta lens including a surface on which a pattern configured with a plurality of pillars or pins having different shapes, heights, and widths is formed, the meta lens having optical characteristics of modulating a phase of light reflected from an object through the pattern of the surface. The electronic device according to an embodiment of the present disclosure may include an image sensor configured to obtain a coded image by receiving phase-modulated light reflected from the object and transmitted through the meta lens and converting the received light into an electrical signal. The electronic device according to an embodiment of the present disclosure may include memory storing one or more instructions; and at least one processor. The at least one processor may be configured to execute the one or more instructions to cause the electronic device to input the coded image to an artificial intelligence model and obtain a label indicating a perception result of the object through inferencing using the artificial intelligence model. In an embodiment of the present disclosure, the artificial intelligence model may be a neural network model trained to obtain a simulated image by inputting an RGB image to a model that reflects the optical characteristics of the meta lens and output a label indicating ground truth of the input RGB image as a perception result of the obtained simulated image. The artificial intelligence model may be trained to minimize a loss value by applying, as the loss value, a similarity value numerically indicating a degree of similarity between the RGB image and the simulated image.

Another aspect of the present disclosure may provide a method, performed by an electronic device, of perceiving an object from an image obtained through a meta lens. The method may include obtaining a coded image by receiving phase-modulated light reflected from the object and transmitted through the meta lens and converting the received light into an electrical signal. The method may include inputting the coded image to an artificial intelligence model and obtaining a label indicating a perception result of the object through inferencing using the artificial intelligence model.

A still another aspect of the present disclosure may provide a computer program product including a computer-readable storage medium. The storage medium may include instructions readable by an electronic device to cause the electronic device to obtain a coded image by receiving phase-modulated light reflected from an object and transmitted through a meta lens and converting the received light into an electrical signal, and input the coded image to an artificial intelligence model and obtain a label indicating a perception result of the object through inferencing using the artificial intelligence model.

### Brief Description of Drawings

The present disclosure may be easily understood by combining the following detailed description with the accompanying drawings, and reference numerals represent structural elements.
FIG. 1 is a conceptual diagram for describing an operation, performed by an electronic device according to an embodiment of the present disclosure, of obtaining a coded image by using a meta lens and outputting a vision perception result by using an artificial intelligence model.
FIG. 2 is a flowchart illustrating a method, performed by an electronic device according to an embodiment of the present disclosure, of obtaining a vision perception result from an image obtained by using a meta lens.
FIG. 3 is a perspective view showing a surface pattern form of a meta lens according to an embodiment of the present disclosure.
FIG. 4 is a block diagram showing components of an electronic device according to an embodiment of the present disclosure.
FIG. 5 is a block diagram showing components of a server and an electronic device according to an embodiment of the present disclosure.
FIG. 6 is a diagram for describing a method of training an artificial intelligence model according to an embodiment of the present disclosure.
FIG. 7 is a diagram for describing a method of training an artificial intelligence model according to an embodiment of the present disclosure.
FIG. 8 is a diagram for describing a method of training an artificial intelligence model according to an embodiment of the present disclosure.
FIG. 9 is a diagram for describing a method of training an artificial intelligence model according to an embodiment of the present disclosure.
FIG. 10 is a flowchart illustrating a method, performed by an electronic device according to an embodiment of the present disclosure, of obtaining a vision perception result by using an artificial intelligence model changed according to a vision task.
FIG. 11 is a diagram illustrating an operation, performed by an electronic device according to an embodiment of the present disclosure, of changing a configuration of an artificial intelligence model according to a vision task.
FIG. 12 is a diagram illustrating an operation, performed by an electronic device according to an embodiment of the present disclosure, of changing a configuration of an artificial intelligence model according to a vision task.
FIG. 13 is a flowchart illustrating a method, performed by an electronic device according to an embodiment of the present disclosure, of changing a configuration of an artificial intelligence model when a replacement or change of a meta lens is detected.
FIG. 14 is a diagram illustrating an operation, performed by an electronic device according to an embodiment of the present disclosure, of changing a configuration of an artificial intelligence model when a replacement or change of a meta lens is detected.
FIG. 15 is a diagram illustrating an operation, performed by an electronic device according to an embodiment of the present disclosure, of obtaining a vision perception result by using a depth sensor and an audio sensor, in addition to a camera system including a meta lens.
FIG. 16 is a diagram illustrating an operation, performed by an electronic device according to an embodiment of the present disclosure, of obtaining a vision perception result by using a depth sensor and an audio sensor, in addition to a camera system including a meta lens.

### Mode for the Invention

Although general terms being currently widely used were selected as terminology used in embodiments of the present disclosure while considering the functions of the present disclosure, they may vary according to intentions of one of ordinary skill in the art, judicial precedents, the advent of new technologies, and the like. Terms arbitrarily selected by the applicant of the disclosure may also be used in a specific case. In this case, their meanings will be described in detail in the description of the corresponding embodiment. Hence, the terms used in the present specification must be defined based on the meanings of the terms and the entire contents of the present disclosure, not by simply stating the terms themselves.

It is to be understood that the singular forms "a," "an," and "the" include plural referents unless the context clearly dictates otherwise. All terms used herein, including technical and scientific terms, have the same meaning as commonly understood by one of ordinary skill in the technical art to which the present disclosure belongs.

In the entire specification, it will be understood that when a certain part "includes" a certain component, the part does not exclude another component but can further include another component, unless the context clearly dictates otherwise. In addition, the terms "portion", "part", "module", etc. used in this specification refer to a unit for processing at least one function or operation, which is implemented as hardware, software, or a combination of hardware and software.

As used here, the phrase "configured (or set) to" may be interchangeably used with the phrases "suitable for," "having the capacity to," "designed to," "adapted to," "made to," or "capable of" depending on the circumstances. The phrase "configured (or set) to" does not essentially mean "specifically designed in hardware to." Rather, in some circumstances, the phrase "system configured to" may mean that the system can perform an operation together with another device or parts. For example, the phrase "processor configured (or set) to perform A, B, and C" may mean a generic-purpose processor (for example, CPU or application processor) capable of performing the operations by executing one or more software programs stored in memory, or a dedicated processor (for example, an embedded processor) for performing the operations.

Also, in the present disclosure, it will be understood that when a component is "connected" or "coupled" to another component, the component may be directly connected or coupled to the other component, but may alternatively be connected or coupled to the other component with an intervening component therebetween, unless specified otherwise.

In the present disclosure, a 'meta lens' may be a lens having optical characteristics of modulating a phase of light reflected from an object, the lens including a metasurface composed of a pattern configured with nano-sized pillars or pins. In an embodiment of the present disclosure, the metasurface may be formed with a plurality of pillars or pins having different shapes, heights and widths.

In the present disclosure, a 'coded image' may be an image obtained by using phase-modulated light transmitted through the meta lens. In an embodiment of the present disclosure, an image sensor may obtain a coded image by receiving phase-modulated light transmitted through the meta lens and converting the received light into an electrical signal.

In the present disclosure, functions related to 'artificial intelligence' may operate through a processor and memory. The processor may be configured with a single processor or a plurality of processors. In this case, the single processor or each of the plurality of processors may be a general-purpose processor such as a central processing unit (CPU), an application processor (AP), and a digital signal processor (DSP), a graphics-dedicated processor such as a graphics processing unit (GPU) and a vision processing unit (VPU), or an artificial intelligence-dedicated processor such as a neural processing unit (NPU). The single processor or the plurality of processors may perform a control operation of processing input data according to a predefined operation rule or an artificial intelligence model stored in the memory. Also, when the single processor or each of the plurality of processors is an artificial intelligence-dedicated processor, the artificial intelligence-dedicated processor may be designed as a specialized hardware structure for processing a predefined artificial intelligence model.

The predefined operation rule or artificial intelligence model may be generated through training. Generating the predefined operation rule or artificial intelligence model through training means generating a predefined operation rule or artificial intelligent model set to perform a desired characteristic (or purpose) by training a basic artificial intelligence model with a plurality of pieces of training data by a training algorithm. The training may be performed by a device for performing artificial intelligence according to the present disclosure or by a separate server and/or system. The training algorithm may be supervised learning, unsupervised learning, semi-supervised learning, or reinforcement learning, although not limited to the above-mentioned examples.

In the present disclosure, the 'artificial intelligence model' may be configured with a plurality of neural network layers. Each of the plurality of neural network layers may have a plurality of weights, and perform a neural network arithmetic operation through an arithmetic operation between an arithmetic operation result of a previous layer and the plurality of weights. The plurality of weights of the plurality of neural network layers may be optimized by a training result of the artificial intelligence model. For example, the plurality of weights may be updated such that a loss value or a cost value obtained by the artificial intelligence model during a training process is reduced or minimized. An artificial neural network model may include a Deep Neural Network (DNN), and the artificial neural network model may be, for example, a Convolutional Neural Network (CNN), a Recurrent Neural Network (RNN), a Restricted Boltzmann Machine (RBM), a Deep Belief Network (DBN), a Bidirectional Recurrent Deep Neural Network (BRDNN), or Deep Q-Networks, although not limited to the above-mentioned examples.

In the present disclosure, 'vision perception' means image signal processing that inputs an RGB image or a coded image to an artificial intelligence model and detects an object (detection), detects a human face (face detection), classifies an object into a specific category (classification), or segments an object (segmentation) from the input image through inferencing using the artificial intelligence model.

Hereinafter, embodiments of the present disclosure will be described in detail with reference to the accompanying drawings for one of ordinary skill in the technical art to which the present disclosure belongs to readily implement the embodiments of the present disclosure. However, the present disclosure is not limited to these embodiments and may be embodied in various other forms.

Hereinafter, the embodiments of the present disclosure will be described in detail with reference to the drawings.

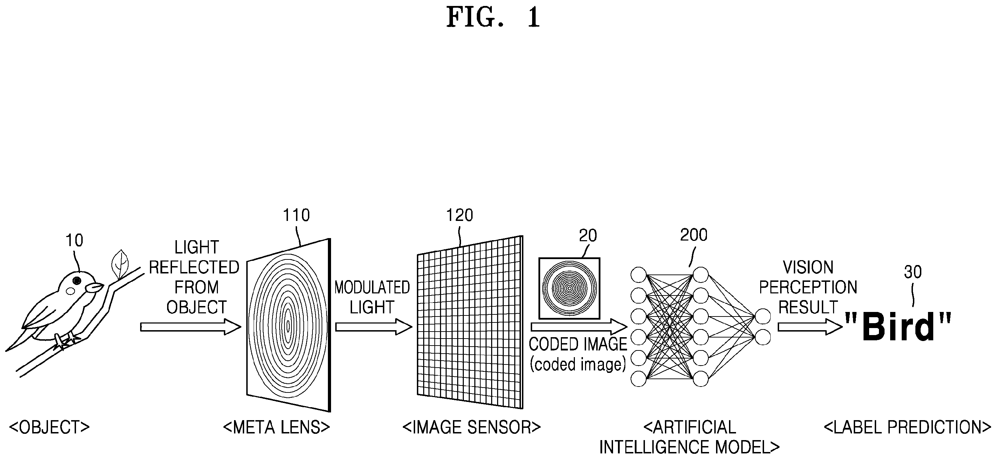

FIG. 1 is a conceptual diagram for describing an operation, performed by an electronic device according to an embodiment of the present disclosure, of obtaining a coded image 20 by using a meta lens 110 and outputting a vision perception result 30 by using an artificial intelligence model 200.

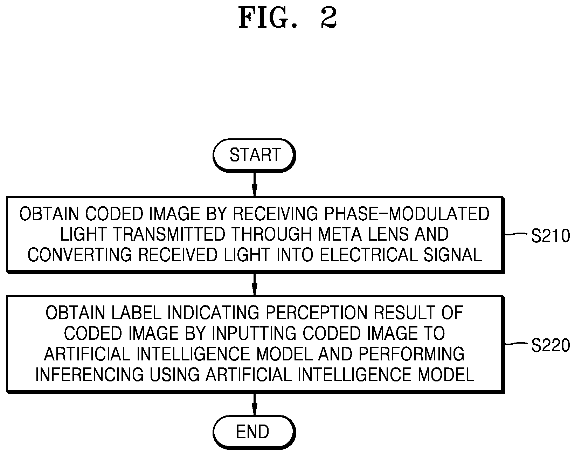

FIG. 2 is a flowchart illustrating a method, performed by an electronic device according to an embodiment of the present disclosure, of obtaining a vision perception result from an image obtained by using a meta lens.

Hereinafter, referring to FIGS. 1 and 2 together, a method, performed by an electronic device according to the present disclosure, of outputting a vision perception result 30 from a coded image 20 obtained through the meta lens 110 will be described in detail.

In operation S210 of FIG. 2, the electronic device may obtain a coded image 20 (see FIG. 1) by receiving phase-modulated light transmitted through the meta lens 110 (see FIG. 1) and converting the received light into an electrical signal.

Referring to FIG. 1 together, the electronic device may include the meta lens 110, an image sensor 120, and an artificial intelligence model 200.

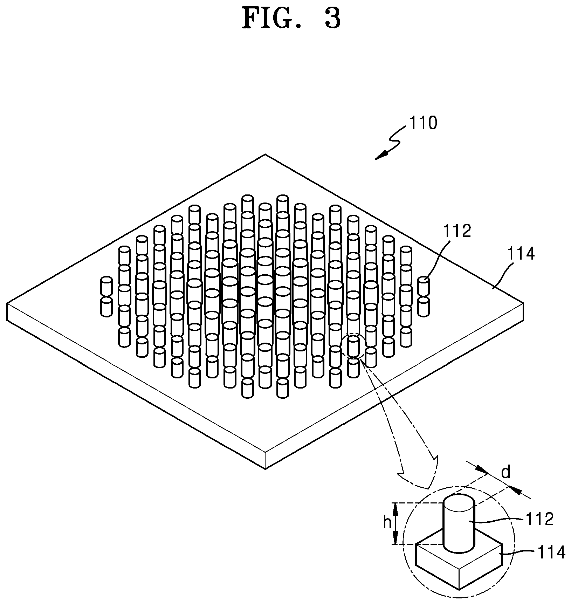

The meta lens 110 may be a lens including a metasurface configured with nano-sized pillars or pins. The metasurface is a three-dimensional surface having a pattern configured with a plurality of pillars or a plurality of pins with different heights and widths, wherein the plurality of pillars or the plurality of pins may be arranged with different spaces. The meta lens 110 may have optical characteristics that encode light by changing a transmission amount of light reflected from an object 10 through the metasurface. In an embodiment of the present disclosure, the meta lens 110 may induce a phase delay of light and modulate a phase of light by changing a refractive index of light according to the pattern configured with the plurality of pillars or pins included in the metasurface. In an embodiment of the present disclosure, the heights, widths and spaces of the plurality of pillars or pins included in the metasurface may be determined by parameter values of a mathematically modeled model, such as a point spread function (PSF), based on training results of the artificial intelligence model 200. The metasurface will be described in detail with reference to FIG. 3.

The image sensor 120 may be configured to obtain a coded image 20 by receiving phase-modulated light transmitted through the meta lens 110 and converting the received light into an electrical signal. In an embodiment of the present disclosure, the image sensor 120 may be, but is not limited to, a Complementary metal-oxide semiconductor (CMOS). Light reflected from an object 10 may be phase-modulated by changing a refractive index by the meta lens 110 and the phase-modulated light may be received by a specific pixel of the image sensor 120. The image sensor 120 may obtain the coded image 20 by converting the received light into an electrical signal.

The coded image 20 may be an image obtained when light reflected from the object 10 is phase-modulated by the meta lens 110 and the modulated light is received by the image sensor 120. The coded image 20 may be a non-readable image from which a shape of the object 10 is incapable of being recognized by the human eye, unlike an RGB image, because a focal point of the coded image 20 has been modulated or distorted.

Referring to operation S220 of FIG. 2, the electronic device may input the coded image 20 to the artificial intelligence model 200 (see FIG. 1), and obtain a label indicating a vision perception result 30 (see FIG. 1) of the coded image 20 by performing inferencing using the artificial intelligence model 200. Referring to FIG. 1 together, the 'artificial intelligence model 200' may be a neural network model trained by a supervised learning manner to obtain a simulated image by inputting an RGB image to a model reflecting the optical characteristics of the meta lens 110, and output a label indicating ground truth of the input RGB image as a perception result of the obtained simulated image. In an embodiment of the present disclosure, the artificial intelligence model 200 may be implemented as a CNN. However, the artificial intelligence module 200 is not limited thereto, and the artificial intelligence model 200 may be implemented as, for example, a RNN, a RBM, a DBN, a BRDNN, or deep Q-networks.

The 'label' obtained by the electronic device as a result of inferencing using the artificial intelligence model 200 may be classification information of an object included in the coded image input to the artificial intelligence model. For example, in a case where an object captured through the meta lens 110 and the image sensor 120 is a cat, the artificial intelligence model 200 may output a probability value that the object will be classified with a label indicating 'bird'. In an embodiment shown in FIG. 1, the electronic device may output a label corresponding to 'bird', which is the vision perception result 30 of the coded image 20 input to the artificial intelligence model 200, through inferencing using the learned artificial intelligence model 200.

However, the present disclosure is not limited thereto, and the electronic device may, as a result of inferencing using the artificial intelligence model 200, output an object perceived from the coded image 20 or obtain a segmentation result of the object.

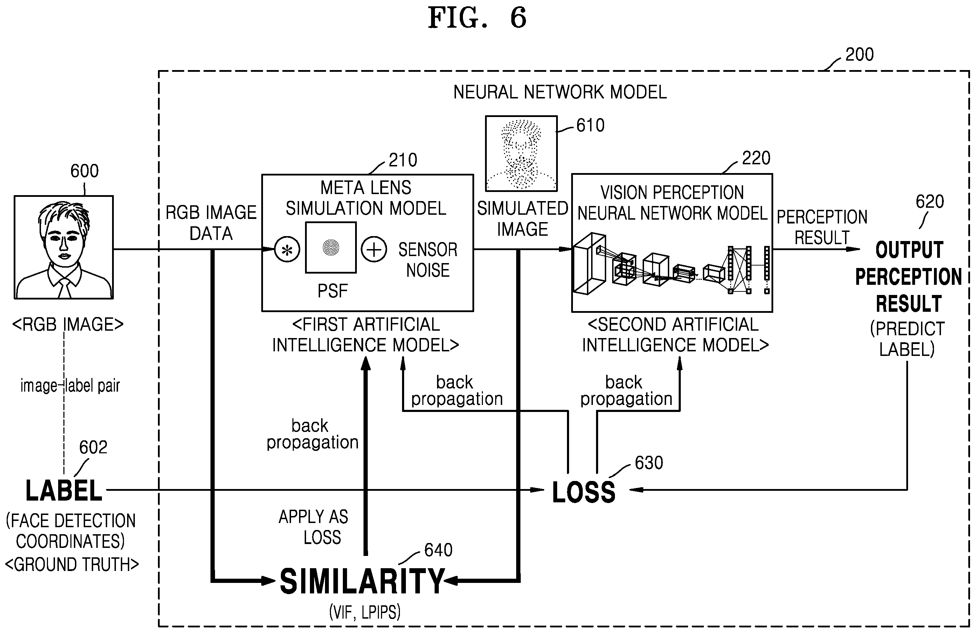

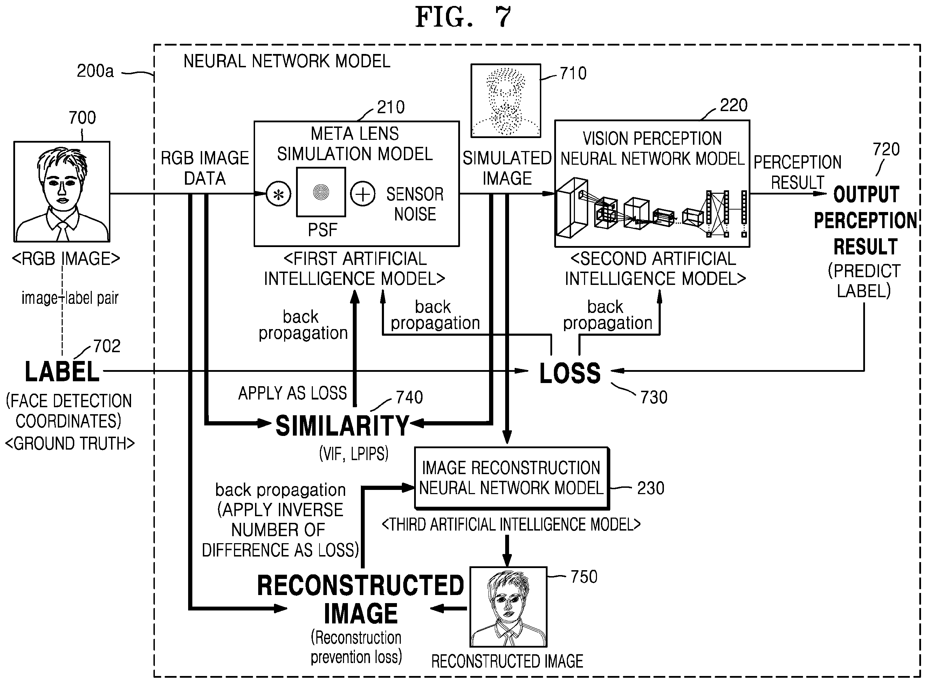

In the present disclosure, the artificial intelligence model 200 shown in FIG. 2 and described may be replaced by artificial intelligence models 200a, 200b, and 200c shown in FIGS. 7 to 9. A method of training the artificial intelligence models 200, 200a, 200b, and 200c will be described in detail with reference to FIGS. 6 to 9.

Recently, there has been an increase in the number of cases where cameras are installed in home appliances such as TVs, refrigerators, and robot vacuum cleaners, or Internet of Things (IoT) devices, and images captured by the cameras are used for monitoring subjects. Advances in vision perception-based artificial intelligence technology have raised the risk of personal information leakage due to hijacking or hacking of image data when cameras are used for monitoring in places where personal privacy should not be exposed, such as at home or in indoor environments. Event cameras, which have been typically used as a method for preventing personal information leakage, obtain images based on a degree of change in intensity of light, and thus may not obtain RGB images capable of being visually identified by humans. However, the event cameras have a limitation in that the event cameras are capable of obtaining images only when there is a change in intensity of light. Also, recent advancements in artificial intelligence technology have made it possible to reconstruct images visually identifiable by humans from images obtained through event cameras, and therefore, solutions for protecting personal privacy and enhancing security are required.

The present disclosure may be aimed to provide an electronic device and an operating method thereof for obtaining a coded image 20, which is not visually identified by a human, by using the meta lens 110 and obtaining a vision perception result 30 from the coded image 20 in order to protect personal privacy and enhance security when a camera is used for monitoring, etc.

The electronic device according to an embodiment shown in FIGS. 1 and 2 may obtain a coded image 20 which is not visually identified or confirmed by a human by modulating light reflected from an object 10 through the meta lens 110, thereby providing a technical effect that prevents a risk of personal information leakage in advance and enhances security even when the electronic device is used indoors such as at home. Also, the electronic device according to an embodiment of the present disclosure may obtain a vision perception result 30 from the coded image 20 through inferencing using a trained artificial intelligence model 200, thereby improving a perception rate compared to existing methods (for example, event cameras, etc.). In addition, unlike conventional camera lenses, the meta lens 110 may not require a plurality of lenses to receive light, and accordingly, the electronic device according to an embodiment of the present disclosure may provide an effect of achieving thinness of the lens and realizing a small form factor by using the meta lens 110.

In an embodiment shown in FIGS. 1 and 2, the electronic device is shown and described as using the meta lens 110 to obtain a coded image 20, but the present disclosure is not limited thereto. In the entire present disclosure, the meta lens 110 may be replaced by a phase mask. In an embodiment of the present disclosure, the electronic device may change a refractive index of light reflected from an object by using a phase mask to induce a phase delay of the light, and obtain a coded image by receiving the phase-delayed light. In the present disclosure, the 'phase mask' may be a device that has a coded aperture including a plurality of apertures with different shapes and sizes, and changes a refractive index of light reflected from an object by controlling a transmission amount of light depending on an aperture ratio of the plurality of apertures included in the coded aperture, thereby causing a focus distortion phenomenon. In an embodiment of the present disclosure, focus distortion of an image due to a phase mask may be mathematically modeled by a PSF, thereby enabling deconvolution to obtain an image in a normal focus state.

The electronic device according to an embodiment of the present disclosure may obtain a vision perception result 30 by inputting a coded image obtained through the phase mask to the artificial intelligence model 200.

FIG. 3 is a perspective view showing a surface pattern form of the meta lens 110 according to an embodiment of the present disclosure.

Referring to FIG. 3, the meta lens 110 may include a metasurface configured with a plurality of pillars 112 having nano-sized dimensions. The plurality of pillars 112 may protrude upward on a substrate 114, and the plurality of pillars 112 may form a three-dimensional surface pattern. The plurality of pillars 112 may be formed with different heights h and widths. In an embodiment shown in FIG. 3, the plurality of pillars 112 are shown in a cylindrical shape, but the shape of the plurality of pillars 112 is not limited to a cylindrical shape. In an embodiment of the present disclosure, the shape of the plurality of pillars 112 may be a cylinder, a cone, a square pillar, or a combination thereof. The plurality of pillars 112 formed on the metasurface may be replaced by an embossing or pin structure.

A height h, cross-sectional diameter d, and volume of each of the plurality of pillars 112 included in the meta lens 110 and a space between the plurality of pillars 112 may be determined based on model parameters according to training results of the artificial intelligence models 200, 200a, 200b, and 200c (see FIGS. 6 to 9). In an embodiment of the present disclosure, the artificial intelligence models 200, 200a, 200b, and 200c may include a PSF that represents the optical characteristics of the meta lens 110 and a differentiable mathematical model that mathematically models sensor noise of the image sensor 120 (see FIG. 1), and the model parameters may be updated and optimized through supervised learning using pairs of input images and ground truths. The height h, cross-sectional diameter d, and volume of each of the plurality of pillars 112 of the metasurface and the space between the plurality of pillars 112 may be determined based on a phase function that has simulated phase modulation by the optical characteristics of the meta lens 110 among model parameters optimized through training of the artificial intelligence models 200, 200a, 200b, and 200c. In an embodiment of the present disclosure, the phase function may be a formula that defines coefficients of a polynomial that mathematically represents degrees of phase modulation according to distances from a center of the meta lens 110.

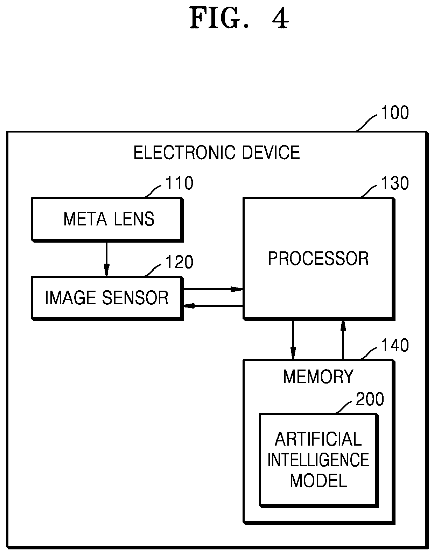

FIG. 4 is a block diagram showing components of an electronic device 100 according to an embodiment of the present disclosure.

Referring to FIG. 4, the electronic device 100 may be implemented as a smart phone, a tablet PC, a laptop computer, a digital camera, an e-book terminal, a digital broadcasting terminal, a Personal Digital Assistants (PDA), a Portable Multimedia Player (PMP), a navigation, or a MP3 player, which includes a camera system. In an embodiment of the present disclosure, the electronic device 100 may be a home appliance, such as a smart TV, an air conditioner, a robot vacuum cleaner, or a clothes care apparatus, which includes a camera. However, the present disclosure is not limited thereto, and in an embodiment of the present disclosure, the electronic device 100 may be implemented as a wearable device, such as a smartwatch, a glasses-type augmented reality device (for example, Augmented Reality (AR) glasses), or a head-mounted device (HMD), which includes a camera.

Referring to FIG. 4, the electronic device 100 may include the meta lens 110, the image sensor 120, a processor 130, and memory 140. The image sensor 120, the processor 130, and the memory 140 may be electrically and/or physically connected to each other. FIG. 4 shows essential components for describing operations of the electronic device 100, and components included in the electronic device 100 are not limited to those shown in FIG. 4. In an embodiment of the present disclosure, the electronic device 100 may further include a depth sensor or an audio sensor. In a case where the electronic device 100 is implemented as a mobile device, the electronic device 100 may further include a battery that supplies power to the image sensor 120 and the processor 130.

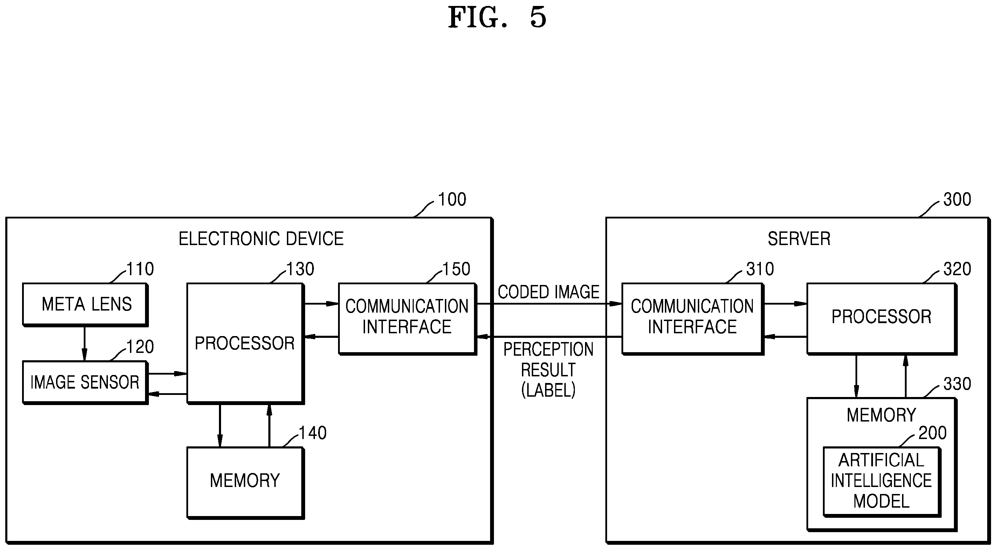

In an embodiment of the present disclosure, the electronic device 100 may further include a communication interface 150 (see FIG. 5) configured to perform data communication with a server or an external device. An embodiment in which the electronic device 100 includes the communication interface 150 will be described in detail with reference to FIG. 5.

The meta lens 110 may be a lens having optical characteristics of modulating or distorting a phase of light by changing a transmission amount of light reflected from an object and refracting or diffracting the light. The meta lens 110 may include a metasurface configured with a plurality of pillars or pins having nano-sized dimensions. The metasurface may be a three-dimensional surface having a pattern configured with a plurality of pillars or a plurality of pins having different heights and widths, wherein the plurality of pillars or the plurality of pins may be arranged with different spaces. The meta lens 110 may have optical characteristics of encoding light reflected from an object 10 through the metasurface. In an embodiment of the present disclosure, the meta lens 110 may induce a phase delay of light and modulate a phase of light by changing a refractive index of light according to the pattern configured with the plurality of pillars or pins included in the metasurface. A structure of the meta lens 110 including the metasurface has been described with reference to FIG. 3, and therefore, redundant descriptions will be omitted.

The image sensor 120 may be configured to obtain a coded image by receiving phase-modulated light transmitted through the meta lens 110 and converting the received light into an electrical signal. In an embodiment of the present disclosure, the image sensor 120 may be configured with a CMOS, but is not limited thereto. Light reflected from an object 10 may be phase-modulated by changing a refractive index by the meta lens 110 and the phase-modulated light may be received by a specific pixel of the image sensor 120. The image sensor 120 may obtain a coded image by converting the received light into an electrical signal. The image sensor 120 may provide image data of the obtained coded image to the processor 130.

The processor 130 may execute one or more instructions of a program stored in the memory 140. The processor 130 may be configured with a hardware component that performs arithmetic, logic, and input/output operations and signal processing. In FIG. 4, the processor 130 is shown as an element, but is not limited thereto. In an embodiment of the present disclosure, the processor 130 may be configured with a single element or a plurality of elements. In an embodiment of the present disclosure, the processor 130 may be configured with a single element or a plurality of elements. A single processor or a plurality of processors included in the processor 130 may be circuitry, such as system on chip (SoC) or integrated circuit (IC).

In an embodiment of the present disclosure, the processor 130 may be implemented as a general-purpose processor such as a single or plurality of CPUs, APs, and DSPs, a graphics-dedicated processor such as GPU and VPU, or an artificial intelligence-dedicated processor such as NPU. The processor 130 may perform a control operation of processing input data according to a pre-defined operation rule or the artificial intelligence model 200, stored in the memory 140. Alternatively, in a case where the processor 130 is an artificial intelligence-dedicated processor, the artificial intelligence-dedicated processor may be designed as a hardware structure specialized to process a specific artificial intelligence model.

The processor 140 may include various processing circuitry and/or a plurality of processors. For example, the term "processor" used in the present disclosure, as well as in the claims, may include various processing circuitry including at least one processor. In the at least one processor, one or more processors may be configured to perform various functions described in the present disclosure individually and/or collectively in a distributed form. As used herein, the 'processor', the 'at least one processor', and the 'one or more processors' may be configured to perform various functions. However, the terms may cover a situation in which a processor performs some of functions and another processor(s) performs other ones of the functions, and a situation in which a single processor performs all functions, without any limitation. Also, the at least one processor may include a combination of processors that perform various functions of the disclosed functions in a distributed manner. The at least one processor may execute program instructions for achieving or performing various functions.

The memory 140 may include at least one type of storage medium among, for example, a flash memory type, a hard disk type, a multimedia card micro type, card type memory (for example, Secure Digital (SD) memory or eXtreme Digital (XD) memory), Random Access Memory (RAM), Static Random Access Memory (SRAM), Read-Only Memory (ROM), Electrically Erasable Programmable Read-Only Memory (EEPROM), Programmable Read-Only Memory (PROM), or an optical disk.

Instructions related to operations of obtaining a vision perception result from a coded image obtained through the meta lens 110 and the image sensor 120 in the electronic device 100 may be stored in the memory 140. In an embodiment of the present disclosure, at least one of instructions, an algorithm, a data structure, a program code, or an application program, which are readable by the processor 130, may be stored in the memory 140. The instructions, algorithm, data structure, and program code stored in the memory 140 may be implemented with a programming or scripting language, such as, for example, C, C++, Java, and assembler.

Hereinafter, functions or operations that are performed when the processor 130 executes instructions or program codes included in modules stored in the memory 140 will be described.

The processor 130 may obtain a coded image through the meta lens 110 and the image sensor 120. The processor 130 may input the coded image to the artificial intelligence model 200 and obtain a label indicating a perception result of the coded image through inferencing using the artificial intelligence model 200.

In an embodiment shown in FIG. 4, the artificial intelligence model 200 may be stored in an on-device manner in the electronic device 100. In an embodiment of the present disclosure, instructions, an algorithm, a data structure, or a program code that constitutes the artificial intelligence model 200 may be stored in the memory 140.

The artificial intelligence model 200 may be a neural network trained by a supervised learning manner to obtain a simulated image by inputting an RGB image to a model reflecting the optical characteristics of the meta lens 110, and output a label indicating ground truth of the input RGB image as a perception result of the obtained simulated image. In an embodiment of the present disclosure, the artificial intelligence model 200 may be implemented as a CNN. However, the artificial intelligence module 200 is not limited thereto, and the artificial intelligence model 200 may be implemented as, for example, a RNN, a RBM, a DBN, a BRDNN, or deep Q-networks.

In an embodiment of the present disclosure, the artificial intelligence model 200 may include a first artificial intelligence model trained to output a simulated image from an RGB image by convolving the RGB image with a point spread function that mathematically models the optical characteristics of the meta lens 110. The first artificial intelligence model may be a deep neural network model trained to minimize a loss value by calculating similarity between an RGB image and a simulated image by using a differentiable mathematical model or a neural network algorithm that numerically measures similarity between a plurality of images, and updating weights through back propagation that applies the calculated similarity as the loss value. The similarity between the RGB image applied as an input image for training the first artificial intelligence model and the simulated image output during a training process may be calculated through, for example, visual information fidelity (VIF), Learned Perceptual Image Patch Similarity (LPIPS), or a combination thereof.

In an embodiment of the present disclosure, the artificial intelligence model 200 may include a second artificial intelligence model trained to, when a coded image is received, output a perception result according to characteristics of a vision task representing a purpose or use of vision perception. The second artificial intelligence model may be a deep neural network model trained to apply, as a loss value, a difference value between a label indicating ground truth paired with an RGB image input to the artificial intelligence model 200 and a label indicating a perception result according to a vision task and minimize the loss value. A method of training the artificial intelligence model 200 including the first artificial intelligence model and the second artificial intelligence model will be described in detail with reference to FIG. 6.

In an embodiment of the present disclosure, the artificial intelligence model 200 may further include a third artificial intelligence model trained to, when a simulated image is received, reconstruct an RGB image, which is an original image before being distorted by the optical characteristics of the meta lens 110. The third artificial intelligence model may be a deep neural network model trained to minimize a loss value by calculating a difference value between an original RGB image input to the artificial intelligence model and a reconstructed image and applying an inverse number of the calculated difference value as the loss value. In a case where the artificial intelligence model 200 includes the third artificial intelligence model, the artificial intelligence model 200 shown in FIG. 4 may be replaced by an artificial intelligence model 200a shown in FIG. 7. A method of training the artificial intelligence model 200a (see FIG. 7) including the third artificial intelligence model will be described in detail with reference to FIG. 7.

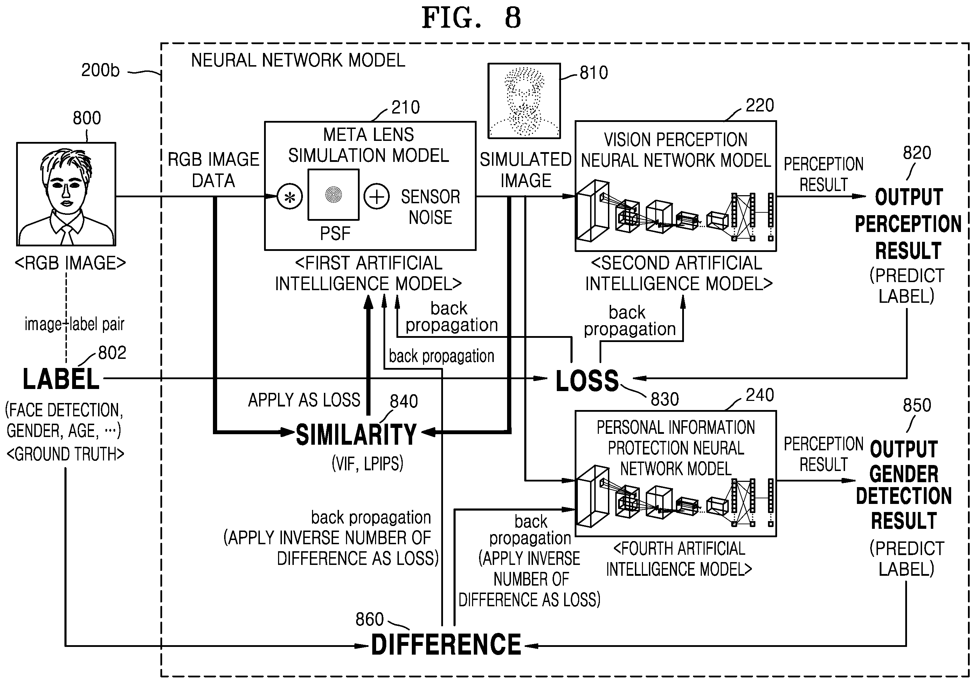

In an embodiment of the present disclosure, the artificial intelligence model 200 may further include a fourth artificial intelligence model trained to, when a coded image is received, output personal identification information perceived from the coded image. The fourth artificial intelligence model may be a deep neural network model trained to minimize a loss value by calculating a difference value between ground truth paired with an RGB image input to the artificial intelligence model 200 and personal identification information output as a perception result and applying an inverse number of the calculated difference value as the loss value. In the present disclosure, 'personal identification information' refers to personal information capable of being perceived or identified from a coded image, and may include, for example, at least one of gender, age, race, skin color, hair color, or eye color. In a case where the artificial intelligence model 200 includes the fourth artificial intelligence model, the artificial intelligence model 200 shown in FIG. 4 may be replaced by an artificial intelligence model 200b shown in FIG. 8. A method of training the artificial intelligence model 200b (see FIG. 8) including the fourth artificial intelligence model will be described in detail with reference to FIG. 8.

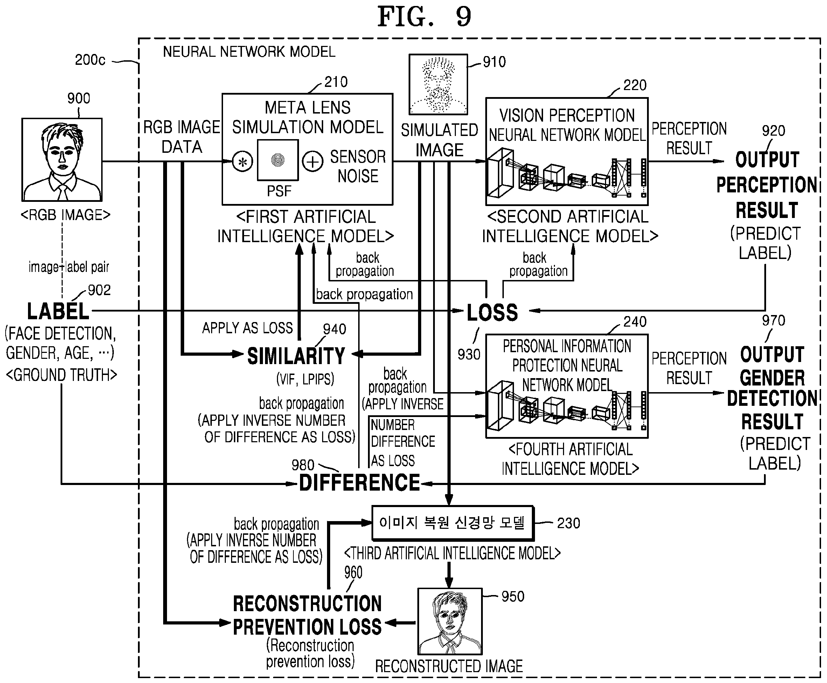

In an embodiment of the present disclosure, the artificial intelligence model 200 may include all of the first artificial intelligence model to the fourth artificial intelligence model. In this case, the artificial intelligence model 200 may be trained to minimize all loss values generated during training processes of the first to fourth artificial intelligence models included therein. In a case where the artificial intelligence model 200 includes all of the first to fourth artificial intelligence models, the artificial intelligence model 200 shown in FIG. 4 may be replaced by an artificial intelligence model 200c shown in FIG. 9. A method of training the artificial intelligence model 200c including all of the first to fourth artificial intelligence models will be described in detail with reference to FIG. 9.

The processor 130 may obtain a label indicating a vision perception result of a coded image through inferencing of inputting the coded image to the artificial intelligence model 200. In the present disclosure, the 'label' may be classification information of an object included in the input coded image. For example, in a case where an object captured through the meta lens 110 and the image sensor 120 is a cat, the artificial intelligence model 200 may output a probability value that the object will be classified as a label indicating 'cat'.

However, the present disclosure is not limited thereto, and the processor 130 may detect an object, detect a face, or segment an object from a coded image, as a result of vision perception using the artificial intelligence model 200. For example, in a case where vision perception using the artificial intelligence model 200 is 'face detection', the processor 130 may input an RGB image to the artificial intelligence model 200 and output position coordinate values of an area detected as a human face as a vision perception result by performing inferencing using the artificial intelligence model 200.

In an embodiment of the present disclosure, the artificial intelligence model 200 may include a backbone network trained to extract a feature map from an input coded image and a head network trained to output a label indicating a perception result of the coded image from the feature map. The processor 130 may change at least one of the backbone network or the head network based on a vision task intended to be perceived by using the artificial intelligence model 200. In an embodiment of the present disclosure, the artificial intelligence model 200 may include a plurality of backbone networks and a plurality of head networks. The processor 130 may select an optimized backbone network according to a vision task representing a purpose or use of vision perception from among the plurality of backbone networks, and change a backbone network of the artificial intelligence model 200 to the selected backbone network. Also, the processor 130 may select an optimized head network according to a vision task from among the plurality of head networks, and change a head network of the artificial intelligence model 200 to the selected head network.

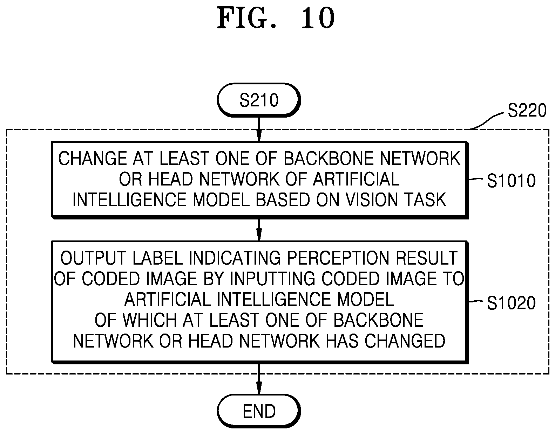

In an embodiment of the present disclosure, when a head network changes according to a vision task, a backbone network may be applied as it is regardless of the vision task. In this case, a structure of the backbone network may be shared with the changed head network. An embodiment in which the processor 130 changes at least one of a backbone network or a head network based on a vision task will be described in detail with reference to FIGS. 10 to 12.

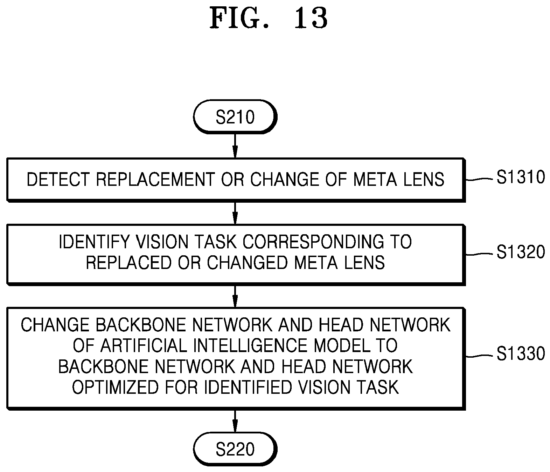

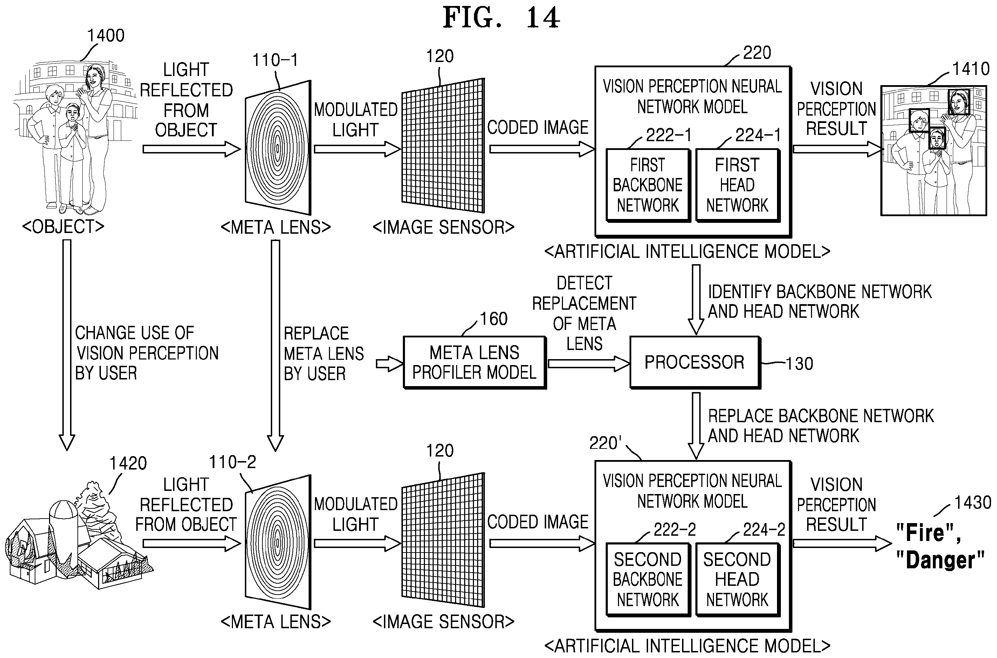

In an embodiment of the present disclosure, the artificial intelligence model 200 may further include a meta lens profiler model for detecting a replacement or change of the meta lens 110 by a user. The processor 130 may detect a replacement or change of the meta lens 110 by a user through the meta lens profiler model. When a replacement or change of the meta lens 110 is detected, the processor 130 may identify a vision task corresponding to the replaced or changed meta lens 110 and change a backbone network and a head network of the artificial intelligence model 200 to a backbone network and a head network set in advance as models optimized for the identified vision task. An embodiment in which the processor 130 changes a backbone network and a head network of the artificial intelligence model 200 according to a replacement or change of the meta lens 110 by a user will be described in detail with reference to FIGS. 13 and 14.

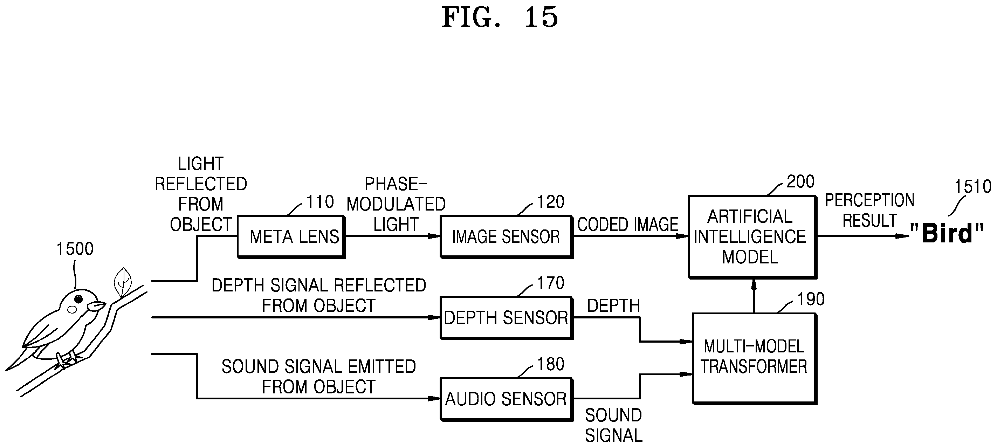

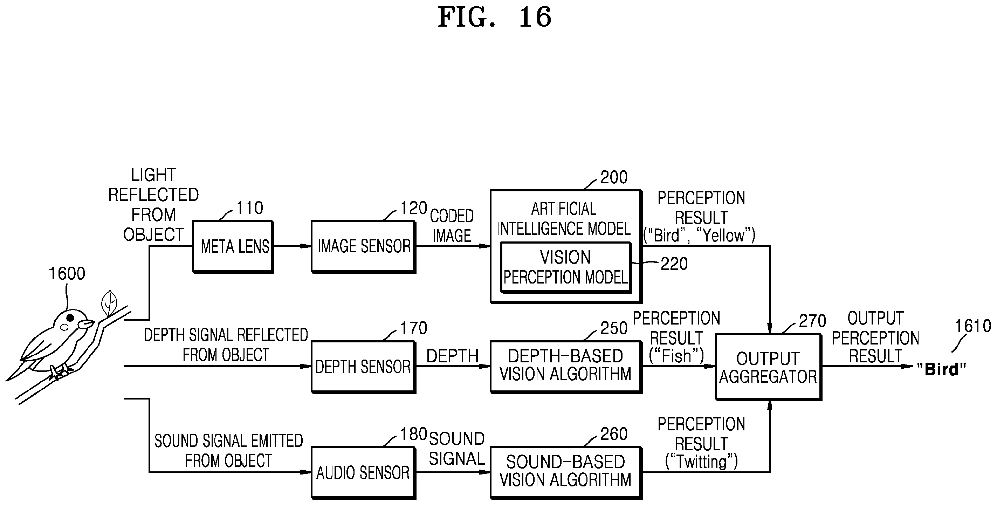

In an embodiment of the present disclosure, the electronic device 100 may further include a depth sensor 170 (see FIGS. 15 and 16) or an audio sensor 180 (see FIGS. 15 and 16). The processor 130 may obtain information about a depth value of an object from the depth sensor 170 and obtain a sound signal emitted from the object from the audio sensor 180. The processor 130 may input the depth value and sound signal to the artificial intelligence model 200 and obtain a vision perception result of a coded image through inferencing using the artificial intelligence model 200. An embodiment in which the processor 130 obtains a vision perception result of a coded image using a depth value and a sound signal will be described in detail in FIGS. 15 and 16.

FIG. 5 is a block diagram showing components of a server 300 and the electronic device 100 according to an embodiment of the present disclosure.

Referring to FIG. 5, the electronic device 100 may further include a communication interface 150 that performs data communication with the server 300. A meta lens 110, an image sensor 120, and a processor 130 included in the electronic device 100 may be the same as the metal lens 110, the image sensor 120, and the processor 130 shown in FIG. 4, and therefore, redundant descriptions will be omitted.

The communication interface 150 may transmit and receive data to/from the server 300 through a wired or wireless communication network and process the data. The communication interface 150 may perform data communication with the server 300 by using at least one of data communication methods including, for example, wired LAN, wireless LAN, Wi-Fi, Bluetooth, zigbee, Wi-Fi Direct (WFD), infrared Data Association (IrDA), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Alliance (WiGig), and RF communication. However, the present disclosure is not limited thereto, and in a case where the electronic device 100 is implemented as a mobile device, the communication interface 150 may perform data transmission/reception to/from the server 300 through a network based on mobile communication standards, such as CDMA, WCDMA, 3G, 4G (LTE), 5G, and/or millimeter wave (mmWave)-based communication.

In an embodiment of the present disclosure, the communication interface 150 may transmit a coded image to the server 300 under control by the processor 130 and receive a label indicating a perception result of the coded image through the artificial intelligence model 200 from the server 300. The communication interface 150 may provide information on the label received from the server 300 to the processor 130.

The server 300 may include a communication interface 310 that communicates with the electronic device 100, memory 330 that stores one or more instructions or a program code, and a processor 320 configured to execute the instructions or program code stored in the memory 330.

A trained artificial intelligence model 200 may be stored in the memory 330 of the server 300. The artificial intelligence model 200 stored in the server 300 may be the same as the artificial intelligence model 200 shown in FIGS. 1 and 4 and described, and therefore, redundant descriptions will be omitted. In an embodiment of the present disclosure, any one of the artificial intelligence models 200, 200a, 200b, and 200c shown in FIGS. 6 to 9 may be stored in the memory 330 of the server 300. The server 300 may obtain image data of a coded image from the electronic device 100 through the communication interface 310. The processor 320 of the server 300 may input the obtained coded image to the artificial intelligence model 200, 200a, 200b, or 200c and perform inferencing using the artificial intelligence model 200, 200a, 200b, or 200c, thereby obtaining a label indicating a perception result of the coded image. The processor 320 may control the communication interface 310 to transmit data of the label to the electronic device 100.

Generally, the electronic device 100 may be limited in terms of a storage capacity of the memory 140 (see FIG. 3), an operation processing speed of the processor 130 (see FIG. 3), and ability to collect a training data set, compared to the server 300. Accordingly, the electronic device 100 according to an embodiment of the present disclosure may transmit input data used for vision perception, for example, image data of a coded image obtained by using the meta lens 110, to the server 300 through a communication network, and the server 300 may perform inferencing through the artificial intelligence model 200, 200a, 200b, or 200c and transmit a vision perception result of the coded image, for example, label data, to the electronic device 100. Therefore, the electronic device 100 may receive and use data representing the vision perception result from the server 300 without large memory and a processor having fast computing capability, thereby shortening a processing time required for vision perception of a coded image and improving accuracy of vision perception.

FIG. 6 is a diagram for describing a method of training the artificial intelligence model 200 according to an embodiment of the present disclosure.

The artificial intelligence model 200 shown in FIG. 6 may be included in an on-device manner within the electronic device 100, but is not limited thereto, and in an embodiment of the present disclosure, the artificial intelligence model 200 may be stored in a server or an external device.

The artificial intelligence model 200 may be a neural network model trained by a supervised learning manner to receive an RGB image 600 and output a label 602 corresponding to ground truth paired with the RGB image 600. In an embodiment of the present disclosure, the artificial intelligence model 200 may be an end-to-end neural network model trained by a method of minimizing a loss value 630 which is a difference value between a label 620 predicted as a perception result from the RGB image 600 and a label 602 corresponding to ground truth. In an embodiment shown in FIG. 6, the artificial intelligence model 200 may be a model trained to detect coordinate values at which a face is detected from the received RGB image 600, and the label 602 corresponding to the ground truth may be, for example, face detection coordinates. However, the present disclosure is not limited thereto, and the label 602 corresponding to the ground truth may vary depending on a purpose or use of vision perception of the artificial intelligence model 200. For example, the label 602 may be a value (for example, a label value indicating 'human') indicating classification information of an object, or a position coordinate value for segmentation of an object.

Referring to FIG. 6, the artificial intelligence model 200 may include a first artificial intelligence model 210 and a second artificial intelligence model 220.

The first artificial intelligence model 210 may be a neural network model trained to output a simulated image 610 from a received RGB image 600 by reflecting the optical characteristics of the meta lens 110 (see FIG. 1). The first artificial intelligence model 210 may include a differentiable mathematical model that mathematically models the optical characteristics of the meta lens 110. The first artificial intelligence model 210 may input the RGB image 600 to the differentiable mathematical model and output the simulated image 610. In an embodiment of the present disclosure, the first artificial intelligence model 210 may obtain the simulated image 610 by mathematically modeling image data of the RGB image 600 by reflecting phase modulation by the metasurface of the meta lens 110, and convolving a PSF that mathematically models focus distortion or modulation for each pixel of the RGB image 600.

In the present disclosure, the 'simulated image 610' may be an image generated by the differentiable mathematical model trained to reflect the optical characteristics of the meta lens 110, and may be a simulated image similar to the coded image obtained by the image sensor 120 (see FIG. 1) by being transmitted through the meta lens 110. In an embodiment of the present disclosure, the first artificial intelligence model 210 may obtain the simulated image 610 by adding simulated sensor noise of the image sensor 120 (see FIG. 1) to a result of convolution between the RGB image 600 and the PSF. The simulated image 610 obtained by the first artificial intelligence model 210 may be output to the second artificial intelligence model 220.

The second artificial intelligence model 220 may be a neural network model trained to output a label 620 predicted based on a vision perception result from the received simulated image 610. In an embodiment of the present disclosure, the second artificial intelligence model 220 may be implemented as a CNN. However, the second artificial intelligence module 220 is not limited thereto, and, in an embodiment of the present disclosure, the second artificial intelligence model 220 may be implemented as, for example, a RNN, a RBM, a DBN, a BRDNN, or deep Q-networks.

In an embodiment of the present disclosure, the trained second artificial intelligence model 220 may be a neural network model trained to, when a coded image is received, output a perception result according to characteristics of a vision task representing a purpose or use of vision perception. The processor 130 (see FIG. 4) of the electronic device 100 may input a coded image distorted by being transmitted through the meta lens 110 (see FIGS. 1, 3, and 4) to the trained second artificial intelligence model 220 and obtain a label indicating a perception result according to characteristics of a vision task by performing inferencing through the second artificial intelligence model 220. In an embodiment shown in FIG. 6, the processor 130 may input a coded image to the second artificial intelligence model 220, detect a face from the coded image through inferencing using the second artificial intelligence model 220, and output a label indicating position coordinate values where the face has been detected. However, the present disclosure is not limited thereto, and the second artificial intelligence model 220 may be implemented as a deep neural network that detects an object, outputs classification information classifying a category of an object, or segments an object from an input image. In this case, the processor 130 may input a coded image to the second artificial intelligence model 220 and output a label indicating an object detection result, classification category information, or a segmentation result.

The artificial intelligence model 200 may be a neural network model trained to update or optimize a plurality of weight values of neural network layers included in the first artificial intelligence model 210 and the second artificial intelligence model 220 through backpropagation of applying a loss value 630, which is a difference value between a label 602 being ground truth paired with an input RGB image 600 and a label 620 predicted from the RGB image 600, to the first artificial intelligence model 210 and the second artificial intelligence model 220. In an embodiment of the present disclosure, the artificial intelligence model 200 may be an end-to-end neural network model trained to output a label 602 being ground truth from an input RGB image 600. In an embodiment of the present disclosure, during a training process of the artificial intelligence model 200, a gradient by partial differentiation of an error function representing a loss value 630 may be applied in the order from the second artificial intelligence model 220 to the first artificial intelligence model 210 and backpropagated, thereby the plurality of weight values of the plurality of neural network layers included in the first artificial intelligence model 210 and the second artificial intelligence model 220 may be updated and optimized. Because the plurality of weight values of the plurality of neural network layers included in the first artificial intelligence model 210 and the second artificial intelligence model 220 are updated and optimized, the loss value 630 of the artificial intelligence model 200 may be trained to be minimized.

During the training process of the artificial intelligence model 200, the first artificial intelligence model 210 may be trained to minimize information indicating similarity between an input RGB image 600 and an output simulated image 610. In an embodiment of the present disclosure, the first artificial intelligence model 210 may be trained to minimize a loss value by calculating similarity 640 between an RGB image 600 and a simulated image 610 by using a differentiable mathematical model or a neural network algorithm that numerically measures similarity between a plurality of images, and applying the calculated similarity 640 as the loss value. In an embodiment of the present disclosure, the 'similarity 640' may be a value calculated by numerically measuring structural similarity, such as a contour edge shape, intensity, and color, between the RGB image 600 and the simulated image 610. The first artificial intelligence model 210 may calculate the similarity 640 between the RGB image 600 and the simulated image 610 by using, for example, at least one of VIF, LPIPS, or a combination thereof. However, the present disclosure is not limited thereto, and the first artificial intelligence model 210 may calculate the similarity 640 between the RGB image 600 and the simulated image 610 through all kinds of metrics capable of numerically measuring similarity between images, such as cosine similarity.

The first artificial intelligence model 210 may be trained to minimize a loss value by updating weights through back propagation that applies the calculated similarity 640 as the loss value. In the case of VIF, a greater value means higher similarity. For example, when the similarity 640 between the RGB image 600 and the simulated image 610 is calculated through VIF, the first artificial intelligence model 210 may be trained to minimize a loss value by applying the similarity 640 as a loss value. In the case of LPIPS, a greater value means lower similarity. For example, when the similarity 640 between the RGB image 600 and the simulated image 610 is calculated through LPIPS, the first artificial intelligence model 210 may be trained to maximize a value calculated by LPIPS by applying an inverse number of the similarity 640 as a loss value.

In a case where image data is hijacked or hacked during a training or inferencing process of the artificial intelligence model 200, there may be a risk of personal information leakage. Particularly, the larger a correlation between the RGB image 600 and the simulated image 610, for example, the larger a cross entropy, it may be more likely that, when the simulated image 610 output from the first artificial intelligence model 210 leaks out, the simulated image will be reconstructed to a human-readable image.

The first artificial intelligence model 210 according to an embodiment shown in FIG. 6 may be trained to calculate the similarity 640 between the RGB image 600 and the simulated image 610 through metrics such as VIF or LPIPS during a training process and apply the similarity 640 as a loss value to minimize the loss value, and therefore, even when the simulated image 610 leaks out due to hijacking or hacking, the leaked simulated image 610 may not be similar to the RGB image 600. Also, because the simulated image 610 is an image distorted by reflecting the optical characteristics of the meta lens, the simulated image 610 may be a non-readable image that is unable to be identified by a human. That is, when a coded image leaks out during a process of inputting an image obtained through the meta lens to the artificial intelligence model 200 to perform inferencing, an image that is not similar to the input image may leak out, and therefore, the electronic device 100 according to an embodiment of the present disclosure may provide a technical effect of protecting an individual's privacy and enhancing security.

FIG. 7 is a diagram for describing a method of training the artificial intelligence model 200a according to an embodiment of the present disclosure.

Referring to FIG. 7, the artificial intelligence model 200a may be a neural network model trained by a supervised learning manner to receive an RGB image 700 and output a label 702 corresponding to ground truth paired with the RGB image 700. In an embodiment of the present disclosure, the artificial intelligence model 200a may be an end-to-end neural network model trained by a method of minimizing a loss value 730, which is a difference value between a label 720 predicted as a perception result from the RGB image 700 and a label 702 corresponding to ground truth. In an embodiment shown in FIG. 7, the artificial intelligence model 200a may be a model trained to detect coordinate values at which a face is detected from the received RGB image 700, and the label 702 corresponding to the ground truth may be, for example, face detection coordinates. However, the present disclosure is not limited thereto, and the label 702 corresponding to the ground truth may vary depending on a purpose or use of vision perception by the artificial intelligence model 200a.

Referring to FIG. 7, the artificial intelligence model 200a may include a first artificial intelligence model 210, a second artificial intelligence model 220, and a third artificial intelligence model 230. The first artificial intelligence model 210 and the second artificial intelligence model 220 shown in FIG. 7 may be the same as the first artificial intelligence model 210 (see FIG. 6) and the second artificial intelligence model 220 (see FIG. 6) shown in FIG. 6, and therefore, redundant descriptions will be omitted. Particularly, the RGB image 700, a simulated image 710, the label 720 predicted as a result of vision perception, the loss value 730, and similarity 740 denoted in FIG. 7 may be respectively the same as the RGB image 600 (see FIG. 6), the simulated image 610 (see FIG. 6), the label 620 (see FIG. 6) predicted as a result of vision perception, the loss value 630 (see FIG. 6), and the similarity 640 (see FIG. 6) denoted in FIG. 6 and described, although different reference numerals are assigned thereto, and therefore, redundant descriptions will be omitted.

The third artificial intelligence model 230 may be a neural network model trained to, when the simulated imaged 710 output from the first artificial intelligence model 210 is received, reconstruct an original image before being distorted by reflecting the optical characteristics of the meta lens 110. In an embodiment shown in FIG. 7, the third artificial intelligence model 230 may output a reconstructed image 750 according to reception of the simulated image 710. The 'reconstructed image 750' may be an RGB image predicted by the first artificial intelligence model 210 to be similar to an RGB image 700, which is an original image before being simulated by reflecting the optical characteristics of the meta lens 110. The third artificial intelligence model 230 may be trained by calculating a difference value between the reconstructed image 750 and the RGB image 700 which is an original image applied as an input to the artificial intelligence model 200a, and applying an inverse number of the difference value as a reconstruction prevention loss 760. In an embodiment of the present disclosure, the third artificial intelligence model 230 may be a deep neural network model trained to minimize a loss value by updating weights through back propagation of applying a reconstruction prevention loss 760. That is, the third artificial intelligence model 230 may be trained to maximize the difference value between the RGB image 700 as the original image and the reconstructed image 750.

In an embodiment shown in FIG. 7, the artificial intelligence model 200a may further include the third artificial intelligence model 230 trained to output the reconstructed image 750 when the simulated image 710 is received, in addition to the first artificial intelligence model 210 and the second artificial intelligence model 220. Because the third artificial intelligence model 230 is trained to apply the inverse number of the difference value between the reconstructed image 750 and the RGB image 700 which is an original image, as the reconstruction prevention loss 760, and maximize the reconstruction prevention loss 760, the reconstructed image 750 obtained from the simulated image 710 may not be similar to the RGB image 700 which is the original image. Accordingly, even when a coded image obtained through the meta lens leaks out during inferencing using the artificial intelligence model 200a, an original RGB image obtained by the image sensor may not be completely reconstructed, and therefore, the electronic device 100 according to an embodiment of the present disclosure may provide a technical effect of protecting personal information and enhancing security.

FIG. 8 is a diagram for describing a method of training the artificial intelligence model 200b according to an embodiment of the present disclosure.

Referring to FIG. 8, the artificial intelligence model 200b may be a neural network model trained by a supervised learning manner to receive an RGB image 800 and output a label 802 corresponding to ground truth paired with the RGB image 800. In an embodiment of the present disclosure, the artificial intelligence model 200b may be an end-to-end neural network model trained by a method of minimizing a loss value 830 which is a difference value between a label 820 predicted as a perception result from an RGB image 800 and a label 802 corresponding to ground truth.

Referring to FIG. 8, the artificial intelligence model 200b may include a first artificial intelligence model 210, a second artificial intelligence model 220, and a fourth artificial intelligence model 240. The first artificial intelligence model 210 and the second artificial intelligence model 220 shown in FIG. 8 may be the same as the first artificial intelligence model 210 (see FIG. 6) and the second artificial intelligence model 220 (see FIG. 6) shown in FIG. 6, and therefore, redundant descriptions will be omitted. As in FIG. 6, the first artificial intelligence model 210 may be trained to minimize a loss value by calculating similarity 840 between an RGB image 800 and a simulated image 810 and applying the calculated similarity 840 as the loss value by using a differentiable mathematical model or a neural network algorithm that numerically measures similarity between a plurality of images. In FIG. 8, the 'similarity 840' may be calculated by the same method of calculating the similarity 640 (see FIG. 6) as shown in FIG. 6 and described, and therefore, redundant descriptions will be omitted.

In an embodiment shown in FIG. 8, the second artificial intelligence model 220 may be a neural network model trained to output a perception result according to characteristics of a vision task representing a purpose or use of vision perception. For example, the second artificial intelligence model 220 may be a neural network model trained to perform a face detection task of, when a simulated image 810 is received, detecting a face from the simulated image 810 and outputting position coordinate values at which the face has been detected. However, the second artificial intelligence model 220 is not limited thereto, and the second artificial intelligence model 220 may be a deep neural network model trained to perform a vision task of detecting, classifying, or segmenting an object.

The fourth artificial intelligence model 240 may be a neural network model trained not to output information corresponding to personal identification information. The fourth artificial intelligence model 240 may be a deep neural network model trained to minimize a loss value by, when a simulated image 810 is received, outputting a label 850 indicating personal identification information as a result of vision perception, calculating a difference value 860 between the label 850 corresponding to the personal identification information and a label 802 corresponding to ground truth applied as an input to the artificial intelligence model 200b, and applying an inverse number of the calculated difference value 860 as the loss value. In an embodiment of the present disclosure, the artificial intelligence model 200b may be an end-to-end neural network model trained to update and optimize weight values of neural network layers included in the first artificial intelligence model 210, as well as the fourth artificial intelligence model 240, by applying the inverse number of the difference value calculated by the fourth artificial intelligence model 240 as a loss value.

The fourth artificial intelligence model 240 may be implemented as, for example, a CNN. However, the fourth artificial intelligence model 240 is not limited thereto, and in an embodiment of the present disclosure, the fourth artificial intelligence model 240 may be implemented as, for example, a RNN, a RBM, a DBN, a BRDNN, or deep Q-networks.

In an embodiment of the present disclosure, "personal identification information" may be personal information capable of being perceived from a coded image obtained through the meta lens 110 (see FIGS. 1, 3, and 4) by the electronic device 100. The personal identification information may include, for example, at least one of gender, age, race, skin color, hair color, or eye color capable of being perceived from a coded image.

In an embodiment of the present disclosure, the fourth artificial intelligence model 240 may be trained to, when a coded image is hijacked or hacked, output specific personal identification information that a user does not want to leak. The fourth artificial intelligence model 240 shown in FIG. 8 may be trained not to, when a simulated image 810 is received, detect a gender of a person included in an RGB image 800 applied as an input to the artificial intelligence model 200b. That is, the fourth artificial intelligence model 240 may be trained to maximize a difference value 860 between a label 802 corresponding to ground truth (for example, male) of a gender paired with a received RGB image 800 and a label 850 (for example, female) of a gender predicted according to a result of vision perception by applying an inverse number of the difference value 860 as a loss value. However, the fourth artificial intelligence model 240 is not limited thereto, and the fourth artificial intelligence model 240 may be trained not to, when a simulated image 810 is received, detect at least one of an age, race, skin color, hair color, or eye color of a person included in an RGB image 800 applied as an input to the artificial intelligence model 200b.

In an embodiment shown in FIG. 8, the artificial intelligent model 200b may further include the fourth artificial intelligence model 240, in addition to the first artificial intelligence model 210 and the second artificial intelligence model 220, trained not to, when a simulated image 810 is received, output personal identification information. The fourth artificial intelligence model 240 may be trained to maximize a difference value between a label 850 output as personal identification information according to a result of vision perception and a label 802 corresponding to ground truth by applying an inverse number of the difference value as a loss value to minimize the loss value. Therefore, even when personal identification information leaks out, the information may leak out as inaccurate information. Accordingly, even when a coded image obtained through the meta lens leaks out due to hijacking or hacking during an inferencing process using the artificial intelligence model 200b, inaccurate personal identification information may leak out from an original RGB image obtained by the image sensor. Therefore, the electronic device 100 according to an embodiment of the present disclosure may provide a technical effect of protecting an individual's privacy and enhancing security.

FIG. 9 is a diagram for describing a method of training the artificial intelligence model 200c according to an embodiment of the present disclosure.

Referring to FIG. 9, the artificial intelligence model 200c may be a neural network model trained in a supervised learning manner to input an RGB image 900 and output a label 902 corresponding to ground truth paired with the RGB image 900. The artificial intelligence model 200c may include a first artificial intelligence model 210, a second artificial intelligence model 220, a third artificial intelligence model 230, and a fourth artificial intelligence model 240. The artificial intelligence model 210 and the second artificial intelligence model 220 shown in FIG. 9 may be the same as the first artificial intelligence model 210 (see FIG. 6) and the second artificial intelligence model 220 (see FIG. 6) shown in FIG. 6, the third artificial intelligence model 230 may be the same as the third artificial intelligence model 230 (see FIG. 7) shown in FIG. 7, and the fourth artificial intelligence model 240 may be the same as the fourth artificial intelligence model 240 (see FIG. 8) shown in FIG. 8 . Therefore, redundant descriptions will be omitted.

In an embodiment shown in FIG. 9, the artificial intelligence model 200c may be an end-to-end neural network model trained by a method of minimizing a loss value by minimizing a loss value 930 which is a difference value between a label 920 representing face detection coordinates predicted as a perception result from an RGB image and a label 902 corresponding to ground truth of the face detection coordinates, minimizing a reconstruction prevention loss 960 which is an inverse number of a difference value between a reconstructed image 950 by the third artificial intelligence model 230 and the RGB image 900, and applying, as the loss value, an inverse number of a difference value between a label 970 representing a gender detection result output from the fourth artificial intelligence model 240 and a label corresponding to ground truth for the gender.

In an embodiment shown in FIG. 9, the artificial intelligence model 200c may be trained to obtain face detection coordinates with high accuracy with respect to face detection, which is a vision task which a user wants to detect from an input image, and detect a gender with low accuracy with respect to personal identification information such as gender for which the user wants to prevent leakage. Also, the artificial intelligence model 200c may be trained to output a reconstructed image that is not similar to an input image such that, even when an image distorted by the meta lens and obtained through the image sensor leaks out during an inferencing process, the image is not accurately reconstructed. Accordingly, because an original RGB image obtained by the image sensor is not reconstructed and personal identification information does not unintentionally leak out even when a coded image obtained through the meta lens leaks out due to hijacking or hacking during an inferencing process using the artificial intelligence model 200c, the electronic device 100 according to an embodiment of the present disclosure may provide a technical effect of protecting an individual's privacy and enhancing security.

FIG. 10 is a flowchart illustrating a method, performed by the electronic device 100 according to an embodiment of the present disclosure, of obtaining a vision perception result by using an artificial intelligence model changed according to a vision task.

Operations S1010 and 1020 shown in FIG. 10 may be operations that embody operation S220 shown in FIG. 2. Operation S1010 of FIG. 10 may be performed after operation S210 shown in FIG. 2 is performed.

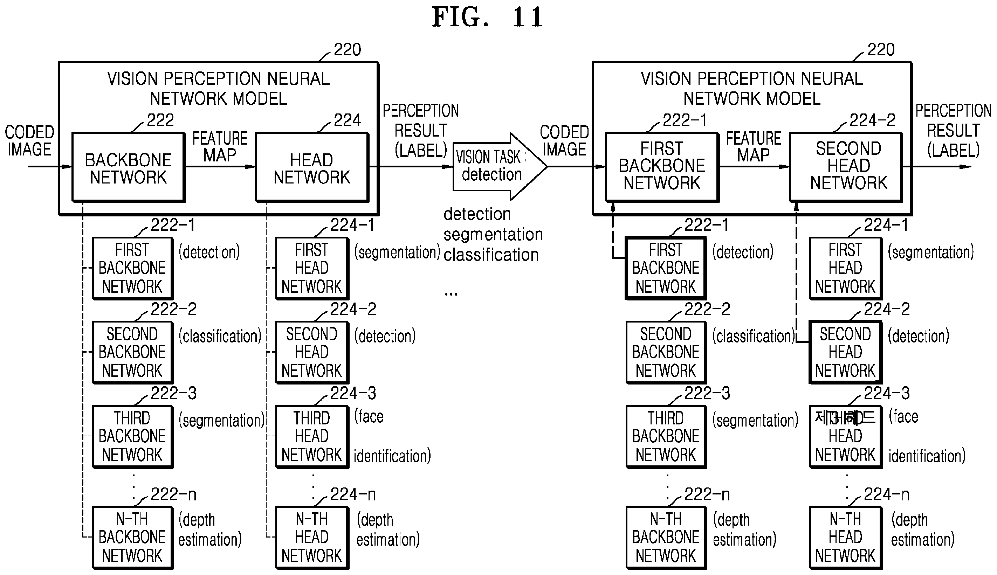

FIG. 11 is a diagram illustrating an operation, performed by the electronic device 100 according to an embodiment of the present disclosure, of changing a configuration of the second artificial intelligence model 220 (see FIGS. 6 to 9) according to a vision task.

Hereinafter, operation, performed by the electronic device 100, of changing a configuration of the second artificial intelligence model 220 according to a vision task will be described with reference to FIGS. 10 and 11 together.

In operation S1010 of FIG. 10, the electronic device 100 may change at least one of a backbone network or a head network of an artificial intelligence model based on a vision task representing a purpose or use of vision recognition. Referring to FIG. 11 together, the second artificial intelligence model 220 may be a vision perception neural network model trained to, when a coded image is received, output a vision recognition result of the coded image. The second artificial intelligence model 220 may include a backbone network 222 and a head network 224.

The backbone network 222 may be a neural network model trained to extract feature values from an input coded image and obtain a feature map using the extracted feature values. The backbone network 222 may be implemented as, for example, GoogleNet, ResNet, VGG, DarkNet, ImageNet, or U-Net, but is not limited thereto.

The head network 224 may be a neural network model trained to output a label indicating a perception result of a coded image from a feature map output from the backbone network 222. The head network 224 may be implemented as, for example, Embedding & Softmax, Pixel-wise softmax, YOLO, or YOLO & embedding, but is not limited thereto.

The processor 130 (see FIG. 4) of the electronic device 100 may change at least one of the backbone network 222 or the head network 224 of the artificial intelligence model based on characteristics of a vision task. In the present disclosure, a 'vision task' may mean a task that outputs a vision perception result from an input image. For example, the vision task may include, but are not limited to, object detection, classification, segmentation, face identification, pose estimation, and depth estimation.

A plurality of backbone networks 222-1 to 222-n may be models optimized and trained according to characteristics of different vision tasks. Here, an 'optimized model' refers to a neural network model that outputs a highly accurate prediction result and requires a short processing time, depending on an amount of training data and a purpose and use of a vision task. For example, a first backbone network 222-1 may be ResNet optimized for 'detection', a second backbone network 222-2 may be VGG optimized for 'classification', and a third backbone network 222-3 may be U-Net optimized for 'segmentation', but are not limited thereto. In an embodiment of the present disclosure, the processor 130 may select an optimized backbone network from among the plurality of backbone networks 222-1 to 222-n according to a purpose or use of a vision task. For example, in a case where a purpose or use of vision perception is 'detection' of an object, the processor 130 may select the first backbone network 222-1 optimized for 'detection' from among the plurality of backbone networks 222-1 to 222-n. The processor 130 may change the backbone network 222 to the first backbone network 222-1 by replacing the existing backbone network 222 by the selected first backbone network 222-1.

The plurality of head networks 224-1 to 224-n may be models optimized and trained according to different vision tasks. For example, the first head network 224-1 may be Pixel-wise softmax optimized for 'segmentation', a second head network 224-2 may be YOLO optimized for 'detection', and a third head network 224-3 may be a YOLO & embedding model optimized for 'face identification', but are not limited thereto. In an embodiment of the present disclosure, the processor 130 may select an optimized head network from among the plurality of head networks 224-1 to 224-n according to characteristics of a vision task. For example, in a case where a purpose or use of vision perception is object detection, the processor 130 may select the second head network 224-2 optimized for 'detection' from among the plurality of head networks 224-1 to 224-n. The processor 130 may change the head network 224 to the second head network 224-2 by replacing the existing head network 224 by the selected second head network 224-2.

Referring again to FIG. 10, in operation S1020, the electronic device 100 may input a coded image to an artificial intelligence model in which at least one of the backbone network or the head network has been changed, and output a label indicating a perception result of the coded image. Referring to FIG. 11 together, the second artificial intelligence model 220 may include the first backbone network 222-1 and the second head network 224-2. When a coded image is input to the second artificial intelligence model 220, a feature map may be extracted from the coded image by the first backbone network 222-1. The extracted feature map may be input to the second head network 224-2, and a label indicating a perception result of the coded image may be output from the second head network 224-2. In an embodiment shown in FIG. 11, because both the first backbone network 222-1 and the second head network 224-2 are neural network models optimized for 'detection', the output label may be a vector value representing a detection result of an object.

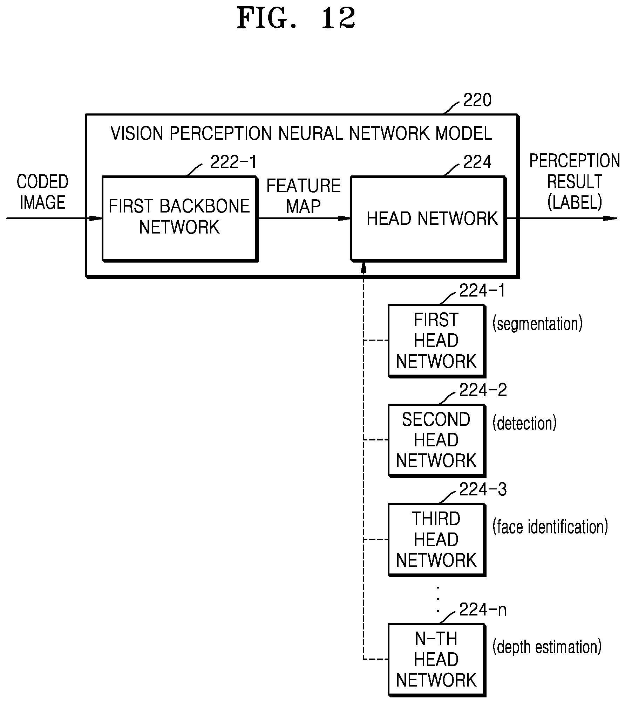

FIG. 12 is a diagram illustrating an operation, performed by the electronic device 100 according to an embodiment of the present disclosure, of changing a configuration of an artificial intelligence model according to a vision task.

Referring to FIG. 12, the second artificial intelligence model 220 may be a vision recognition neural network model trained to, when a coded image is received, output a vision perception result of the coded image. The second artificial intelligence model 220 may include the first backbone network 222-1 and the head network 224. The first backbone network 222-1 and the head network 224 may be the same as those described with reference to FIG. 11, and therefore, redundant descriptions will be omitted.

In an embodiment shown in FIG. 12, a backbone network of the second artificial intelligence model 220 may be determined as the first backbone network 222-1 and may not be changed depending on a vision task. When a vision task is changed depending on a purpose or use of vision perception, the head network 224 may be changed. The plurality of head networks 224-1 to 224-n may be models optimized and trained according to different vision tasks. For example, the first head network 224-1 may be Pixel-wise softmax optimized for 'segmentation', the second head network 224-2 may be YOLO optimized for 'detection', and the third head network 224-3 may be a YOLO & embedding model optimized for 'face identification', but are not limited thereto.

In an embodiment of the present disclosure, the processor 130 (see FIG. 4) of the electronic device 100 may select an optimized head network from among the plurality of head networks 224-1 to 224-n according to a purpose or use of vision perception, and replace the existing head network 224 by the selected head network. For example, in a case where a purpose or use of vision perception is object detection, the processor 130 may select the second head network 224-2 optimized for 'detection' from among the plurality of head networks 224-1 to 224-n and replace the existing head network 224 by the selected second head network 224-2.

When the head network 224 is changed depending on a purpose or use of vision perception, a model parameter of the first backbone network 222-1 may not be changed regardless of the changed head network 224. For example, weights of the first backbone network 222-1 may be shared with the head network 224 that changes according to a purpose or use of vision perception.

However, the present disclosure is not limited thereto. In an embodiment of the present disclosure, when the head network 224 is changed, a model parameter of the first backbone network 222-1 may be changed according to a vision task of the changed head network 224. For example, in a case where a purpose or use of vision perception is 'face identification', the processor 130 may change the head network 224 to the third head network 224-3 and replace a weight of the first backbone network 222-1 by a weight optimized for face identification.

In embodiments shown in FIGS. 10 to 12, the electronic device 100 may change at least one of the backbone network 222 or the head network 224 according to a vision task representing a purpose or use of vision perception, such as 'object detection', 'classification', 'segmentation', 'face identification', or 'depth estimation', thereby providing a technical effect of improving accuracy of a vision perception result and shortening a processing time.

FIG. 13 is a flowchart illustrating a method, performed by the electronic device 100 according to an embodiment of the present disclosure, of changing a configuration of an artificial intelligence model when a replacement or change of a meta lens is detected.

Operations S1310 and S1330 shown in FIG. 13 may be performed after operation S210 shown in FIG. 2 is performed. After operation S1330 shown in FIG. 13 is performed, operation S220 of FIG. 2 may be performed.

FIG. 14 is a diagram illustrating an operation, performed by the electronic device 100 according to an embodiment of the present disclosure, of changing a configuration of the second artificial intelligence model 220 when a replacement or change of the meta lens 110 is detected.

Hereinafter, operation of changing a configuration of the second artificial intelligence model 220 when the electronic device 100 detects a replacement or change of the meta lens 110 will be described with reference to FIGS. 13 and 14 together.

In operation S1310 of FIG. 13, the electronic device 100 may detect a replacement or change of the meta lens. Referring to FIG. 14 together, a user may replace or change the meta lens 110 according to a purpose or use of vision perception. A meta lens may have specific optical characteristics according to a purpose or use of vision perception. A coded image may be obtained due to optical characteristics of hardware, such as a surface pattern of the meta lens, and accuracy of a vision perception result, such as object detection, classification, segmentation, face identification, and situation recognition, may be determined based on characteristics of the coded image. For example, a first meta lens 110-1 may be a lens optimized for obtaining a coded image for 'face identification', and a second meta lens 110-2 may be a lens optimized for obtaining a coded image for 'situation recognition'. In an embodiment shown in FIG. 14, a user may replace the first meta lens 110-1 by the second meta lens 110-2 when a use of vision perception changes.

The electronic device 100 may recognize the replacement of the meta lens by the user. In an embodiment of the present disclosure, the electronic device 100 may further include a meta lens profiler model 160, and the processor 130 (see FIG. 4) may detect a meta lens replacement from the first meta lens 110-1 to the second meta lens 110-2 by using the meta lens profiler model 160. When a replacement to the second meta lens 110-2 occurs by a user input while the image sensor 120 receives phase-modulated light reflected from an object 1400 and transmitted through the first meta lens 110-1, the image sensor 120 may receive phase-modulated light reflected from an object 1420 and transmitted through the second meta lens 110-2. In an embodiment of the present disclosure, the meta lens profiler model 160 may be a neural network model trained in a supervised learning manner to apply, as an input, a coded image obtained by the image sensor 120 which has received phase-modulated light by a specific meta lens, and apply a vector value representing the specific meta lens as ground truth. However, the present disclosure is not limited thereto, and, in an embodiment of the present disclosure, the meta lens may have an encoded structure having a unique pattern, and the meta lens profiler model 160 may be implemented as a classifier model to identify a specific meta lens through the encoded structure. When a replacement of the meta lens is detected, the meta lens profiler model 160 may provide the processor 130 with a signal indicating that the replacement of the meta lens has been detected.

Referring again to FIG. 13, in operation S1320, the electronic device 100 may identify a vision task corresponding to a replaced or changed meta lens. Referring to FIG. 14 together, when the replacement of the meta lens is detected, the processor 130 may identify a vision task optimized for the replaced meta lens. Here, a 'vision task optimized for a meta lens' may mean a vision task with high accuracy of vision perception and a short processing time, which is output when phase-modulated light transmitted through a specific meta lens and received by the image sensor 120 is input to the second artificial intelligence model 220. For example, the first meta lens 110-1 may be a meta lens optimized for 'face identification' among vision tasks, and the second meta lens 110-2 may be a meta lens optimized for 'situation recognition'.

Referring again to FIG. 13, in operation S1330, the electronic device 100 may change a backbone network and a head network of an artificial intelligence model to a backbone network and a head network optimized for the identified vision task. Referring to FIG. 14 together, the second artificial intelligence model 220 may include the first backbone network 222-1 and the first head network 224-1. Details about the backbone network and the head network may be the same as those described with reference to FIGS. 10 to 12, and therefore, redundant descriptions will be omitted. In an embodiment of the present disclosure, the first backbone network 222-1 and the first head network 224-1 may be neural network models optimized to perform 'face identification' among vision tasks. For example, the first backbone network 222-1 may be GoogleNet, and the first head network 224-1 may be YOLO, but are not limited thereto. The processor 130 may identify the first backbone network 222-1 and the first head network 224-1 included in the second artificial intelligence model 220. In an embodiment of the present disclosure, the processor 130 may identify which vision task-optimized neural network models the identified first backbone network 222-1 and first head network 224-1 are. The processor 130 may replace the first backbone network 222-1 and the first head network 224-1, respectively, by the second backbone network 222-2 and the second head network 224-2 optimized for 'situation recognition' which is a vision task corresponding to the second meta lens 110-2 replaced by a user. For example, the second backbone network 222-2 may be ResNet, and the second head network 224-2 may be SoftMax, but are not limited thereto.

Referring again to FIG. 13, the electronic device 100 may input a coded image to the changed second artificial intelligence model 220 and obtain a vision perception result through inferencing using the second artificial intelligence model 220. Referring to FIG. 14 together, in a case where the second artificial intelligence model 220 includes the first backbone network 222-1 and the first head network 224-1, when a coded image is input to the second artificial intelligence model 220, a face identification result with a face 1410 surrounded by a bounding box may be obtained as an inference result. When a replacement to the second meta lens 110-2 has occurred by a user, according to the second artificial intelligence model 220 including the second backbone network 222-2 and the second head network 224-2 and a coded image being input to the second artificial intelligence model 220, a label indicating a specific situation (for example, "Fire" or "Danger") may be obtained as an inference result.

In an embodiment shown in FIGS. 13 and 14, when a meta lens is changed or replaced by a user, the electronic device 100 may automatically select a backbone network and a head network optimized for a vision task corresponding to the changed or replaced meta lens, and replace an existing backbone network and head network by the selected backbone network and head network to change an artificial intelligence model (in FIG. 14, the 'second artificial intelligence model 220'), thereby providing a technical effect of improving accuracy of a vision perception result and shortening a processing time.

FIG. 15 is a diagram illustrating an operation, performed by the electronic device 100 according to an embodiment of the present disclosure, of obtaining a vision perception result by using the depth sensor 170 and the audio sensor 180, in addition to a camera system including the meta lens 110.

Referring to FIG. 15, the electronic device 100 may further include, in addition to the meta lens 110, the image sensor 120, the processor 130 (see FIG. 4), and the memory 140 (see FIG. 4), the depth sensor 170, the audio sensor 180, and a multi-model transformer 190. The meta lens 110 and the image sensor 120 may be the same as those described with reference to FIGS. 1, 3, and 4, and therefore, redundant descriptions will be omitted. In an embodiment of the present disclosure, an artificial intelligence model 200 shown in FIG. 15 may be replaced by the artificial intelligence models 200, 200a, 200b, and 200c shown in FIGS. 6 to 9 and described.

The depth sensor 170 may be a sensor configured to obtain depth information about an object 1500. Here, the 'depth information' may mean information about a distance from the depth sensor 170 to the specific object 1500. In an embodiment of the present disclosure, the depth sensor 170 may be configured as a Time of Flight (ToF) sensor that irradiates light onto the object 1500 by using a light source and obtains depth information according to a time taken for the irradiated light to be reflected from the object 1500 and received by a light receiving sensor. However, the depth sensor 170 is not limited thereto, and the depth sensor 170 may be configured as a sensor that obtains depth information by using at least one method of a Structured Light method or a Stereo Image method.

The audio sensor 180 may be a sensor that receives sound emitted from the object 1500 and converts the received sound into a sound signal which is an electrical signal. In an embodiment of the present disclosure, the audio sensor 180 may include a microphone.

The multi-model transformer 190 may obtain depth information of the object 1500 from the depth sensor 170 and obtain a sound signal from the audio sensor 180. The multi-model transformer 190 may convert the depth information and the sound signal into n-dimensional vector values by embedding the depth information and the sound signal. The multi-model transformer 190 may input an embedding vector to the artificial intelligence model 200.

The artificial intelligence model 200 may receive a coded image from the image sensor 120, receive an embedding vector from the multi- model transformer 190, and output a vision perception result based on the coded image and the embedding vector. In an embodiment shown in FIG. 15, the artificial intelligence model 200 may output a label value 1510 (for example, "Bird") indicating a perception result of the object 1500.

FIG. 16 is a diagram illustrating an operation, performed by the electronic device 100 according to an embodiment of the present disclosure, of obtaining a vision perception result by using the depth sensor 170 and the audio sensor 180, in addition to a camera system including the meta lens 110.

Referring to FIG. 16, the electronic device 100 may include the meta lens 110, the image sensor 120, the processor 130 (see FIG. 4), the memory 140 (see FIG. 4), the depth sensor 170, the audio sensor 180, the artificial intelligence model 200, a depth-based vision algorithm 250, and a sound-based vision algorithm 260. The depth sensor 170 and the audio sensor 180 may be the same as those described with reference to FIG. 15, and therefore, redundant descriptions will be omitted. In an embodiment of the present disclosure, the artificial intelligence model 200 shown in FIG. 16 may be replaced by the artificial intelligence models 200, 200a, 200b, and 200c shown in FIGS. 6 to 9 and described.

The depth-based vision algorithm 250 may be a neural network model trained to, when a depth value is received, output a label value indicating a perception result of the depth value. In an embodiment of the present disclosure, the depth-based vision algorithm 250 may be a neural network model trained through supervised learning of applying a vector obtained by embedding a depth value as an input and applying a label corresponding to a vision perception result as ground truth. In an embodiment shown in FIG. 16, the depth-based vision algorithm 250 may, when a depth value is received from the depth sensor 170, output a label value (for example, "Fish") according to a vision perception result through inferencing. The depth-based vision algorithm 250 may provide the output label value to an output aggregator 270.

The sound-based vision algorithm 260 may be a neural network model trained to, when a sound signal is received, output a label value indicating a perception result of the sound signal. In an embodiment of the present disclosure, the sound-based vision algorithm 260 may be a neural network model trained through supervised learning of applying a vector obtained by embedding a sound signal as an input and applying a label corresponding to a vision perception result of the sound signal as ground truth. In an embodiment shown in FIG. 16, the sound-based vision algorithm 260 may, when a sound signal is received from the audio sensor 180, output a label value (for example, "Twitting") according to a vision perception result through inferencing. The sound-based vision algorithm 260 may provide the output label value to the output aggregator 270.

The output aggregator 270 may be a model trained to output a final perception result regarding the object 1600 from input data received from the artificial intelligence model 200, the depth-based vision algorithm 250 and the sound-based vision algorithm 260. In an embodiment of the present disclosure, the output aggregator 270 may be a rule-based training model. For example, the output aggregator 270 may include softmax. However, the present disclosure is not limited thereto, and the output aggregator 270 may be a neural network model trained to convert input data received from the artificial intelligence model 200, the depth-based vision algorithm 250 and the sound-based vision algorithm 260 into a feature vector value by embedding the input data, and output ground truth from the feature vector value. In an embodiment shown in FIG. 16, the output aggregator 270 may receive a perception result (for example, "Bird" or "Yellow") of an object 1600 from the artificial intelligence model 200 as an input, receive a perception result (for example, "Fish") of the object 1600 from the depth-based vision algorithm 250 as an input, receive a perception result (for example, "Twitting") of the object 1600 from the sound-based vision algorithm 260 as an input, and output a label value 1610 (for example, "Bird") corresponding to a final perception result regarding the object 1600.

In embodiments shown in FIGS. 15 and 16, the electronic device 100 may output a vision perception result for the object 1500 or 1600 by using depth information and a sound signal respectively obtained by the depth sensor 170 and the audio sensor 180, in addition to a vision perception result obtained by inputting a coded image obtained through the meta lens 110 and the image sensor 120 to the artificial intelligence model 200, thereby improving accuracy and performance of vision perception compared to a system including only the meta lens 110, the image sensor 120, and the artificial intelligence model 200.

The present disclosure may provide an electronic device 100 configured to obtain a vision perception result from an image obtained through a meta lens 110. The electronic device 100 according to an embodiment of the present disclosure may include a meta lens 110 including a surface on which a pattern configured with a plurality of pillars or pins having different shapes, heights, and widths is formed, the meta lens having optical characteristics of modulating a phase of light reflected from an object through the pattern of the surface. The electronic device 100 according to an embodiment of the present disclosure may include an image sensor 120 configured to obtain a coded image by receiving phase-modulated light reflected from the object and transmitted through the meta lens 110 and converting the received light into an electrical signal. The electronic device 100 according to an embodiment of the present disclosure may include memory 140 storing one or more instructions; and at least one processor 130. The at least one processor 300 may be configured to execute the one or more instructions to cause the electronic device 100 to input the coded image to an artificial intelligence model 200 and obtain a label indicating a perception result of the object through inferencing using the artificial intelligence model 200. In an embodiment of the present disclosure, the artificial intelligence model 200 may be a neural network model trained to obtain a simulated image by inputting an RGB image to a model that reflects the optical characteristics of the meta lens 110 and output a label indicating ground truth of the RGB image as a perception result of the obtained simulated image. The artificial intelligence model 200 may be trained to minimize a loss value by applying, as the loss value, a similarity value numerically indicating a degree of similarity between the RGB image and the simulated image.

In an embodiment of the present disclosure, shapes, height and widths of a plurality of pillars or pins forming a surface pattern of the meta lens 110 may be formed based on mathematical modeling parameters according to a training result of the artificial model 200.

In an embodiment of the present disclosure, the artificial intelligence model 200 may include a first artificial intelligence model 210 trained to output the simulated image from the RGB image by convolving the RGB image with a point spread function that mathematically models the optical characteristics of the meta lens 110.

In an embodiment of the present disclosure, the first artificial intelligence model may be a deep neural network trained to minimize the loss value by calculating similarity between the RGB image and the simulated image by using a differentiable mathematical model or a neural network algorithm that numerically measures similarity between a plurality of images, and updating weights between layers through back propagation that applies the calculated similarity as the loss value.

In an embodiment of the present disclosure, the similarity between the RGB image and the simulated image may be calculated through at least one of visual information fidelity (VIF), Learned Perceptual Image Patch Similarity (LPIPS), or a combination thereof.

In an embodiment of the present disclosure, the artificial intelligence model 200 may further include a second artificial intelligence model trained to, when the simulated image is received, reconstruct an original RGB image before being distorted by the optical characteristics of the meta lens 110.

In an embodiment of the present disclosure, the second artificial intelligence model may be a deep neural network model trained to minimize the loss value by applying, as the loss value, an inverse number of a difference value between the reconstructed RGB image and the original RGB image input to the artificial intelligence model.

In an embodiment of the present disclosure, the artificial intelligence model 200 may further include a third artificial intelligence model trained to, when the input coded image is received, output a perception result according to characteristics of a vision task. The at least one processor 130 may execute the one or more instructions to cause the electronic device 100 to input the coded image to the third artificial intelligence model and output a label indicating a perception result according to the characteristics of the vision task through inferencing using the third artificial intelligence model.

In an embodiment of the present disclosure, the third artificial intelligence model may be a deep neural network model trained to apply, as the loss value, a difference value between the label output as the perception result and a label indicating ground truth paired with the RGB image input to the artificial intelligence model 200, and minimize the loss value.

In an embodiment of the present disclosure, the artificial intelligence model 200 may further include a fourth artificial intelligence model trained to, when the input coded image is received, output personal identification information perceived from the coded image. The fourth artificial intelligence model may be a deep neural network model trained to minimize the loss value by calculating a difference value between the personal identification information output as the perception result and the ground truth paired with the RGB image input to the artificial intelligence model 200 and applying an inverse number of the calculated difference value as the loss value.

In an embodiment of the present disclosure, the personal identification information may include at least one of gender, age, race, skin color, hair color, or eye color, which is perceivable from the coded image.

In an embodiment of the present disclosure, the artificial intelligence model 200 may further include a meta lens profiler model configured to detect a replacement or change of the meta lens 110 by a user. The at least one processor 130 may be configured to execute the one or more instructions to cause the electronic device 100 to, when a replacement or change of the meta lens 110 is detected through the meta lens profiler model, identify a vision task corresponding to the replaced or changed meta lens 110. The at least one processor 130 may be configured to execute the one or more instructions to cause the electronic device 100 to change a backbone network or a head network included in the artificial intelligence model 200 to a backbone network or a head network set in advance as models optimized for the identified vision network.

In an embodiment of the present disclosure, the electronic device 100 may further include a depth sensor 170 configured to measure a depth value of an object, and an audio sensor 180 configured to obtain a sound signal from the object. The at least one processor 130 may be configured to execute the one or more instructions to cause the electronic device 100 to input a depth value of an object measured by the depth sensor 170 and a sound signal obtained by the audio sensor 180 to the artificial intelligence model 200 and obtain a label according to a perception result of the object through inferencing using the artificial intelligence model 200.

The present disclosure may provide a method, performed by an electronic device 100, of perceiving an object from an image obtained through a meta lens 110. The method may include obtaining a coded image by receiving phase-modulated light reflected from the object and transmitted through the meta lens 110 and converting the received light into an electrical signal (S210). The method may include inputting the coded image to an artificial intelligence model and obtaining a label indicating a perception result of the object through inferencing using the artificial intelligence model 200 (S220).

In an embodiment of the present disclosure, the artificial intelligence model 200 may include a first artificial intelligence model trained to output the simulated image from the RGB image by convolving the RGB image with a point spread function that mathematically models the optical characteristics of the meta lens 110. The artificial intelligence model 200 may be a deep neural network trained to minimize the loss value by calculating similarity between the RGB image and the simulated image by using a differentiable mathematical model or a neural network algorithm that numerically measures similarity between a plurality of images, and updating weights between layers through back propagation that applies the calculated similarity as the loss value.

In an embodiment of the present disclosure, the similarity between the RGB image and the simulated image may be calculated through at least one of visual information fidelity (VIF), Learned Perceptual Image Patch Similarity (LPIPS), or a combination thereof.

In an embodiment of the present disclosure, the artificial intelligence model 200 may include a backbone network trained to extract a feature map from the input coded image and a head network trained to output a label indicating a perception result of the coded image from the feature map. The obtaining of the label (S220) may include changing at least one of the backbone network or the head network based on a purpose or use of a vision task intended to be perceived by using the artificial intelligence model 200 (S1010). The obtaining of the label (S220) may include outputting a label indicating a perception result of the coded image by inputting the coded image to the artificial intelligence model 200 of which at least one of the backbone network or the head network has changed (S1020).

In an embodiment of the present disclosure, the method may further include recognizing a replacement or change of the meta lens 100 by a user (S1310), and identifying a vision task corresponding to the replaced or changed meta lens 110 (S1320). The method may further include changing the backbone network and the head network of the artificial intelligence model 200 to a backbone network and a head network set in advance as models optimized for the identified vision network (S1330).

In an embodiment of the present disclosure, the method may further include obtaining a depth value of the object from a depth sensor 170, and obtaining a sound signal from the object through an audio sensor 180. In the obtaining of the label (S220), the electronic device 100 may input the depth value of the object measured by the depth sensor 170 and the sound signal obtained by the audio sensor 180 to the artificial intelligence model 200 and obtain a label according to a perception result of the object through inferencing using the artificial intelligence model 200.

The present disclosure may provide a computer program product including a computer-readable storage medium. The storage medium may include instructions readable by an electronic device 100 to cause the electronic device 100 to obtain a coded image by receiving phase-modulated light reflected from an object and transmitted through a meta lens 110 and converting the received light into an electrical signal, and input the coded image to an artificial intelligence model and obtain a label indicating a perception result of the object through inferencing using the artificial intelligence model 200.

A program executed by the electronic device 100 described in the present disclosure may be implemented with a hardware component, a software component, and/or a combination of a hardware component and a software component. The program may be executed by all systems capable of executing computer-readable instructions.

The software may include a computer program, a code, an instruction, or a combination of one or more of these, and independently or collectively instruct or configure a processing device to operate as desired.

The software may be implemented as a computer program including instructions stored in computer-readable storage media. The computer-readable storage media may include, for example, magnetic storage media (for example, ROM, RAM, a floppy disc, a hard disc, etc.) and optical readable media (for example, compact disc read-only memory (CD-ROM) and digital versatile disc (DVD)). The computer-readable recording media may be distributed to computer systems over a network, in which computer-readable codes may be stored and executed in a distributed manner. The media may be readable by a computer, stored in memory, and executed in a processor.

The computer-readable recording media may be provided in the form of non-transitory storage media. Herein, 'non-transitory' means that the recording media do not include a signal and are tangible, but does not distinguish from cases that data is semi-permanently or temporarily stored in the storage media. For example, 'non-transitory storage media" may include a buffer in which data is temporarily stored.

Also, the program according to embodiments of the disclosure may be included in a computer program product and provided. The computer program product may be traded between a seller and a purchaser as a commodity.

The computer program product may include a software program and computer-readable storage media in which a software program is stored. For example, the computer program product may include a product in the form of a software program (for example, a downloadable application) that is electronically distributed through a manufacturer of the electronic device 100 or an electronic market (for example, Samsung Galaxy Store). For electronic distribution, at least a part of the software program may be stored on storage media or may be created temporarily. In this case, the storage media may be storage media of a server of a manufacturer of the electronic device 100, a server of an electronic market, or a relay server for temporarily storing a software program.

The computer program product may include storage medium of a server or storage medium of the electronic device 100 in a system configured with the electronic device 100 and/or the server. Alternatively, when there is a third device (for example, a wearable device) communicatively connected to the electronic device 100, the computer program product may include storage medium of the third device. Alternatively, the computer program product may include a software program that is transmitted from the electronic device 100 to the third device or from the third device to the electronic device.

In this case, one of the electronic device or the third device may perform methods according to the disclosed embodiments by executing the computer program product. Alternatively, at least one of the electronic device 100 or the third device may perform the methods according to the disclosed embodiments in a distributed manner by executing at least one computer program product.

For example, the electronic device 100 may control another electronic device communicatively connected to the electronic device 100 to perform the methods according to the disclosed embodiments by executing a computer program product stored in the memory 130 (see FIG. 2).

As another example, the third device may control the electronic device communicatively connected to the third device to perform the methods according to the disclosed embodiments by executing the computer program product.

When the third device executes the computer program product, the third device may download the computer program product from the electronic device 100 and execute the downloaded computer program product. Alternatively, the third device may perform the methods according to the disclosed embodiments by executing a computer program product provided in a pre-loaded state.

Although the embodiments have been described by limited embodiments and drawings, those skilled in the art will appreciate that various modifications and variations can be made from the above description. For example, appropriate results may be achieved even when the described techniques are performed in a different order than described, and/or components of the described computer system or modules are coupled or combined in a different manner than described or are replaced or substituted by other components or equivalents.

## Claims

1. An electronic device (100) comprising:
a meta lens (110) including a surface on which a pattern including a plurality of pillars or pins having different shapes, heights, and widths is formed, the meta lens having optical characteristics of modulating a phase of light reflected from an object through the pattern on the surface;
an image sensor (120) configured to obtain a coded image by receiving phase-modulated light reflected from the object and transmitted through the meta lens 110 and converting the received light into an electrical signal;
memory (140) storing one or more instructions; and
at least one processor (130) configured to execute the one or more instructions to cause the electronic device (100) to:
input the coded image to an artificial intelligence model (200) and output a perception result of the object through inferencing using the artificial intelligence model (200),
wherein the artificial intelligence model (200) is a neural network model trained to obtain a simulated image by inputting an RGB image to a model that reflects the optical characteristics of the meta lens (110) and to output a label indicating ground truth of the input RGB image as a perception result of the obtained simulated image, and
the artificial intelligence model (200) is trained to minimize a loss value by applying, as the loss value, a similarity value numerically indicating a degree of similarity between the RGB image and the simulated image.

2. The electronic device (100) of claim 1, wherein
the artificial intelligence model (200) comprises
a first artificial intelligence model trained to output the simulated image from the RGB image by convolving the RGB image with a point spread function that mathematically models the optical characteristics of the meta lens (110).

3. The electronic device (100) of claim 2, wherein
the first artificial intelligence model is
a deep neural network trained to minimize the loss value by calculating similarity between the RGB image and the simulated image by using a differentiable mathematical model or a neural network algorithm that numerically measures similarity between a plurality of images and updating weights between layers through back propagation that applies the calculated similarity as the loss value.

4. The electronic device (100) of claim 3, wherein
the similarity between the RGB image and the simulated image is calculated through at least one of visual information fidelity (VIF), Learned Perceptual Image Patch Similarity (LPIPS), or a combination thereof.

5. The electronic device (100) of any one of claims 1 to 4, wherein
the artificial intelligence model (200) further comprises
a second artificial intelligence model trained to, when the simulated image is received, reconstruct an original RGB image before being distorted by the optical characteristics of the meta lens (110).

6. The electronic device 100 of any one of claims 1 to 5, wherein
the artificial intelligence model (200) further comprises
a third artificial intelligence model trained to, when the input coded image is received, output a perception result according to characteristics of a vision task, and
the at least one processor (130) is configured to execute the one or more instructions to cause the electronic device (100) to
input the coded image to the third artificial intelligence model and output a label indicating a perception result according to the characteristics of the vision task through inferencing using the third artificial intelligence model.

7. The electronic device (100) of any one of claims 1 to 6, wherein
the artificial intelligence model (200) further comprises
a fourth artificial intelligence model trained to, when the input coded image is received, output personal identification information perceived from the coded image, and
the fourth artificial intelligence model is a deep neural network model trained to minimize the loss value by calculating a difference value between the personal identification information output as the perception result and the ground truth paired with the RGB image input to the artificial intelligence model (200) and applying an inverse number of the calculated difference value as the loss value.

8. The electronic device (100) of any one of claims 1 to 7, wherein
the artificial intelligence model (200) further comprises
a meta lens profiler model configured to detect a replacement or change of the meta lens (110) by a user, and
the at least one processor (130) is configured to execute the one or more instructions to cause the electronic device (100) to:
when a replacement or change of the meta lens (110) is detected through the meta lens profiler model, identify a vision task corresponding to the replaced or changed meta lens (110), and
change a backbone network or a head network included in the artificial intelligence model (200) to a backbone network or a head network set in advance as models optimized for the identified vision network.

9. A method, performed by an electronic device (100), of obtaining a perception result of an object from an image obtained through a meta lens (110), the method comprising:
obtaining a coded image by receiving phase-modulated light reflected from the object and transmitted through the meta lens (110) and converting the received light into an electrical signal (S210); and
inputting the coded image to an artificial intelligence model and obtaining a label indicating a perception result of the object through inferencing using the artificial intelligence model (200) (S220),
wherein the artificial intelligence model (200) is a neural network model trained to obtain a simulated image by inputting an RGB image to a model that reflects optical characteristics of the meta lens (110) and to output a label indicating ground truth of the input RGB image as a perception result of the obtained simulated image, and
the artificial intelligence model (200) is trained to minimize a loss value by applying a similarity value numerically representing a degree of similarity between the RGB image and the simulated image as the loss value.

10. The method of claim 9, wherein
the artificial intelligence model (200) comprises
a first artificial intelligence model trained to output the simulated image from the RGB image by convolving the RGB image with a point spread function that mathematically models the optical characteristics of the meta lens (110), and
the first artificial intelligence model is
a deep neural network trained to minimize the loss value by calculating similarity between the RGB image and the simulated image by using a differentiable mathematical model or a neural network algorithm that numerically measures similarity between a plurality of images and updating weights between layers through back propagation that applies the calculated similarity as the loss value.

11. The method of claim 10, wherein
the similarity between the RGB image and the simulated image is calculated through at least one of visual information fidelity (VIF), Learned Perceptual Image Patch Similarity (LPIPS), or a combination thereof.

12. The method of any one of claims 9 to 11, wherein
the artificial intelligence model (200) comprises
a backbone network trained to extract a feature map from the input coded image and a head network trained to output a label indicating a perception result of the coded image from the feature map, and
the obtaining of the label (S220) comprises
changing at least one of the backbone network or the head network based on a purpose or use of a vision task intended to be perceived by using the artificial intelligence model 200 (S1010); and
outputting a label indicating a perception result of the coded image by inputting the coded image to the artificial intelligence model (200) of which at least one of the backbone network or the head network has changed (S1020).

13. The method of any one of claims 9 to 12, further comprising:
recognizing a replacement or change of the meta lens (100) by a user (S1310);
identifying a vision task corresponding to the replaced or changed meta lens (110) (S1320); and
changing the backbone network and the head network of the artificial intelligence model (200) to a backbone network and a head network set in advance as models optimized for the identified vision network (S1330).

14. The method of any one of claims 9 to 13, further comprising:
obtaining a depth value of the object from a depth sensor (170); and
obtaining a sound signal from the object through an audio sensor (180),
wherein the obtaining of the label (S220) comprises
inputting the depth value of the object measured by the depth sensor (170) and the sound signal obtained by the audio sensor (180) to the artificial intelligence model (200) and obtaining a label according to a perception result of the object through inferencing using the artificial intelligence model (200).

15. A computer program product including a computer-readable storage medium storing instructions executed by an electronic device (100) to cause the electronic device (100) to:
obtain a coded image by receiving phase-modulated light reflected from an object and transmitted through a meta lens (110) and converting the received light into an electrical signal; and
input the coded image to an artificial intelligence model and obtain a label indicating a perception result of the object through inferencing using the artificial intelligence model (200).
